(19) Europäisches Patentamt / European Patent Office / Office européen des brevets

(11) **EP 2 598 569 B1**

(12) **EUROPEAN PATENT SPECIFICATION**

(45) Date of publication and mention
of the grant of the patent:
**18.04.2018 Bulletin 2018/16**

(51) Int Cl.:
*C08L 23/08* (2006.01)   *C10M 143/04* (2006.01)
*C10M 143/06* (2006.01)   *C10M 143/08* (2006.01)
*C08L 23/14* (2006.01)

(21) Application number: **11738099.8**

(22) Date of filing: **07.07.2011**

(86) International application number:
**PCT/US2011/043183**

(87) International publication number:
**WO 2012/015572 (02.02.2012 Gazette 2012/05)**

(54) **VISCOSITY MODIFIERS COMPRISING BLENDS OF ETHYLENE-BASED COPOLYMERS**

VISKOSITÄTSMODIFIKATOREN MIT MISCHUNGEN AUS ETHYLEN-BASIERTEN COPOLYMEREN

ADJUVANTS DE VISCOSITÉ COMPRENANT DES MÉLANGES DE COPOLYMÈRES À BASE D'ÉTHYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.03.2011 EP 11156620
28.07.2010 US 368473 P
13.01.2011 US 201113006057
13.01.2011 US 201113006042**

(43) Date of publication of application:
**05.06.2013 Bulletin 2013/23**

(73) Proprietor: **ExxonMobil Chemical Patents Inc.
Baytown, TX 77520 (US)**

(72) Inventors:
• **DATTA, Sudhin
Houston
TX 77007 (US)**
• **FARNG, Liehpao, O.
Lawrenceville
NJ 08648 (US)**

• **MINAK-BERNERO, Vera
Bridgewater
NJ 08807 (US)**
• **TSE, Mun, Fu
Seabrook
TX 77586 (US)**
• **SIROTA, Eric, B.
Flemington
NJ 08822 (US)**
• **SMIRNOVA, Diana
High Bridge
NJ 08829 (US)**
• **KOLB, Rainer
Kingwood
TX 77345 (US)**

(74) Representative: **ExxonMobil Chemical Europe Inc.
IP Law Europe
Hermeslaan 2
1831 Machelen (BE)**

(56) References cited:
**WO-A1-2010/126721     US-A1- 2010 273 693**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 598 569 B1

**Description**

**FIELD OF THE INVENTION**

The present invention relates to polymer blends useful as rheology modifiers. More particularly, the invention relates to compositionally disperse and/or crystallinity disperse polymer blends that are useful in modifying the rheological properties of fluids, wherein the individual components of the polymer blend have large differences in crystallinity and include at least one component having no observable crystallinity.

**BACKGROUND OF THE INVENTION**

Lubrication fluids are applied between moving surfaces to reduce friction, thereby improving efficiency and reducing wear. Lubrication fluids also often function to dissipate the heat generated by moving surfaces.

One type of lubrication fluid is a petroleum-based lubrication oil used for internal combustion engines. Lubrication oils contain additives that help the lubrication oil to have a certain viscosity at a given temperature. In general, the viscosity of lubrication oils and fluids is inversely dependent upon temperature. When the temperature of a lubrication fluid is increased, the viscosity generally decreases, and when the temperature is decreased, the viscosity generally increases. For internal combustion engines, for example, it is desirable to have a lower viscosity at low temperatures to facilitate engine starting during cold weather, and a higher viscosity at higher ambient temperatures when lubrication properties typically decline.

Additives for lubrication fluids and oils include rheology modifiers, such as viscosity index (VI) improvers. VI improving components, many of which are derived from ethylene-alpha-olefin copolymers, modify the rheological behavior of a lubricant to increase viscosity and promote a more constant viscosity over the range of temperatures at which the lubricant is used. Higher ethylene content copolymers efficiently promote oil thickening and shear stability. However, higher ethylene content copolymers also tend to flocculate or aggregate in oil formulations leading to extremely viscous and, in the limit, solid formulations. Flocculation typically happens at ambient or subambient conditions of controlled and quiescent cooling. This deleterious property of otherwise advantageous higher ethylene content viscosity improvers is measured by low temperature solution rheology. Various remedies have been proposed for these higher ethylene content copolymer formulations to overcome or mitigate the propensity towards the formation of high viscosity flocculated materials.

It is anticipated that the performance of VI improvers can be substantially improved, as measured by the thickening efficiency (TE) and the shear stability index (SSI), by appropriate and careful manipulation of the structure of the VI improver. Particularly, it has been discovered that performance improves when the distribution of the monomers and the chain architecture are controlled and segregated into at least three compositionally disperse and/or crystallinity disperse polymeric populations. These disperse polymeric populations may be achieved by the use of a synthesis process that employs metallocene-based catalysts in the polymerization process.

One proposed solution is the use of blends of amorphous and semi-crystalline ethylene-based copolymers for lubricant oil formulations. The combination of two such ethylene-propylene copolymers allows for increased thickening efficiency, shear stability index, low temperature viscosity performance and pour point. See, e.g., U.S. Patent Nos. 7,402,235 and 5,391,617, and European Patent 0 638,611. WO 2010/126721 relates to rheology modifiers comprising compositionally disperse polymeric compositions and/or crystallinity disperse polymeric compositions that may be useful in modifying the rheological properties of lubricating fluids.

There remains a need, however, for novel rheology modifier compositions comprised of ethylene and alpha-olefin-based comonomers suitable for use in VI improvers which have unexpectedly high thickening efficiency compared to prior compositions while still being equivalent in their beneficial low temperature solution rheology properties. The present invention meets this and other needs. The combined components of the invention deliver a viscosity modifier which does not show an adverse effect on viscosity due to lowering the temperature from ambient to -35°C in solution in synthetic and petroleum basestocks.

Contrary to the teachings of the prior art, it has been found that there is a preferred relationship between the amount and composition of the discrete distributions of the ethylene-based alpha-olefin copolymers used in the polymeric blends for VI improvers. This relationship leads to ethylene-based alpha-olefin copolymers having a distribution of at least two individual ethylene-based copolymers with $C_3$-$C_{20}$ alpha olefin comonomers. Each of the individual ethylene-based copolymers (hereinafter components) is a single copolymer made in a single polymerization environment having a predefined composition and molecular weight. In one or more embodiments, each of the components is a most probable distribution of molecular weights. The components differ in their molecular weight and composition. The invention describes the combination of these polymers in a predetermined weight ratio such that the less crystalline polymer (typically one with a lower wt% ethylene in the composition of the component) is present in an amount of from 35 to 65 wt% based on the total weight of the combination. The balance of the composition is a component with greater crystallinity and thus a higher wt% ethylene. It is preferred if the less crystalline polymer comprises from 38 to 62 wt%, or from 40 to 60 wt% of the weight of the entire viscosity modifier.

The present invention describes the ranges of the composition and crystallinity for the components of the viscosity modifier. In some embodiments of the invention, the components, when they are copolymers of ethylene and propylene, are separated by no less than 17 wt% and preferably no less than 21 wt% ethylene content. In addition, the less crystalline polymer has an ethylene content from 44 to 52 wt% and preferably from 46 to 50 wt%.

## SUMMARY OF THE INVENTION

The present invention is directed to polymer blend compositions for use as viscosity modifiers comprising at least two ethylene-based copolymer components. The viscosity modifiers described herein comprise a first ethylene-based copolymer having an ethylene content of from 44 to 52 wt% and/or a heat of fusion of from 0 to 15 J/g and a second ethylene-based copolymer having an ethylene content of from 68 to 75 wt% and/or a heat of fusion of from 40 to 65 J/g. The invention is also directed to lubricant compositions comprising a lubricating basestock and a polymer blend as described herein.

## DETAILED DESCRIPTION OF THE INVENTION

The present invention relates to polymer blends comprising polymer components including, but not limited to, compositionally disperse ethylene-based copolymers and/or crystallinity disperse ethylene-based copolymers that are useful in modifying the rheological properties of lubrication fluids. The compositionally disperse polymer blends are formed from at least two discrete compositions of ethylene-based copolymers. The crystallinity disperse polymer blends are formed from ethylene-based copolymers having at least two discrete values of residual crystallinity.

The performance of ethylene-based rheology modifiers as viscosity index (VI) improvers is measured by the thickening efficiency (TE) and the shear stability index (SSI), particularly by the ratio of TE to SSI. It is generally believed that the composition of an olefin copolymer at a given SSI largely determines the TE, and that higher ethylene content is preferred because of its inherent higher TE. While increasing the ethylene content of rheology modifiers leads to improved TE/SSI ratios, it also leads to increasing crystallinity of the olefin copolymer. Increasing crystallinity, however, detracts from the performance of a rheology modifier as a VI improver because crystalline polymers tend to flocculate, either by themselves or in association with other components of the lubrication oil, and precipitate out of lubrication oils. These precipitates are apparent as regions (e.g., "lumps") of high viscosity or essentially complete solidification (e.g., "gels") and can lead to clogs and blockages of pumps and other passageways for the lubrication fluid and can harm and in some cases cause failure of moving machinery.

While not wishing to be bound by any particular theory, it is believed that rheology modifiers for lubrication fluids comprising ethylene-based copolymers which are compositionally disperse and/or crystallinity disperse will be less prone to the deleterious effects of macroscopic crystallization in dilute solution, as measured by the change in the rheology of the fluid solution compared to an equivalent amount of a single ethylene-based copolymer of the same average composition as the disperse blend. It is also believed that these compositionally and/or crystallinity disperse components will have lower crystallization on cooling from ambient to sub-ambient temperatures, resulting in better low temperature flow properties in solution as compared to equivalent compositionally uniform polymers of similar molecular weight and thickening efficiency. These polymer blends and their use in lubrication oil compositions with basestocks can be distinguished from other compositionally non-disperse olefin copolymers by physical separation of the compositionally disperse polymer blend into components as well as by a higher ratio of the melting point by DSC to the heat of fusion than would be observed for a non-disperse polymer of the same average ethylene content, melt viscosity, and composition.

This invention is directed to a selection of blend compositions for use as viscosity modifiers comprising at least two ethylene-based copolymer components. The viscosity modifiers described herein comprise a first ethylene-based copolymer having an ethylene content from 44 to 52 wt% and/or a heat of fusion of from 0 to 15 J/g and a second ethylene-based copolymer having an ethylene content of from 68 to 75 wt% and/or a heat of fusion of from 40 to 65 J/g. The copolymers each have a weight average molecular weight (Mw) in the range of from 80,000 to 130,000, and MIA/MIB is less than or equal to 3.0. The invention is also directed to lubricant compositions comprising a lubricating basestock and a polymer blend as described herein.

Definitions

For purposes of this invention and the claims herein, the definitions set forth below are used.

As used herein, the term "complex viscosity" means a frequency-dependent viscosity function determined during forced small amplitude harmonic oscillation of shear stress, in units of Pascal-seconds, that is equal to the difference between the dynamic viscosity and the out-of-phase viscosity (imaginary part of complex viscosity).

As used herein, the term "Composition Distribution Breadth Index" (CDBI) is as defined in U.S. Patent No. 5,382,630. CDBI is defined as the weight percent of the copolymer molecules having a comonomer content within 50% of the median total molar comonomer content. The CDBI of a copolymer is readily determined utilizing well known techniques for isolating individual fractions of a sample of the copolymer. One such technique is Temperature Rising Elution Fraction (TREF), as described in L. Wild, et al., J. Poly. Sci., Poly. Phys. Ed., vol. 20, p. 441 (1982) and U.S. Patent No. 5,008,204.

As used herein, the term "compositionally disperse" means a polymer blend comprised of at least two discrete compositions of ethylene-based copolymers.

As used herein, the term "copolymer" includes any polymer having two or more monomers.

As used herein, the term "crystallinity disperse" means a polymer blend comprised of at least two ethylene-based copolymers having discrete values of residual crystallinity.

As used herein, the term "disperse" means that the compositions include constituent polymer fractions which have different compositions and/or different crystallinity due, in part, to different molecular weight distributions and/or different monomer compositional or sequence distributions.

As used herein, the term "EA" means the weight percent of ethylene-derived units in the first ethylene-based copolymer based on the weight of the first ethylene-based copolymer.

As used herein, the term "EB" means the weight percent of ethylene-derived units in the second ethylene-based copolymer based on the weight of the second ethylene-based copolymer.

As used herein, the term "ethylene-based copolymer" means a copolymer comprised of ethylene and one or more $C_3$-$C_{20}$ comonomers.

As used herein, the term "HA" means the heat of fusion in units of joules/gram on a first melt of the first ethylene-based copolymer.

As used herein, the term "HB" means the heat of fusion in units of joules/gram on the first melt of the second ethylene-based copolymer.

As used herein, the term "intermolecular composition distribution," (also "InterCD" or "intermolecular CD"), defines the compositional heterogeneity in terms of ethylene content, among polymer chains. It is expressed as the minimum deviation, analogous to a standard deviation, in terms of weight percent ethylene from the average ethylene composition for a given copolymer sample needed to include a given weight percent of the total copolymer sample, which is obtained by excluding equal weight fractions from both ends of the distribution. The deviation need not be symmetrical. When expressed as a single number, for example, an intermolecular composition distribution of 15 wt% shall mean the larger of the positive or negative deviations. For example, at 50 wt% intermolecular composition distribution the measurement is akin to conventional composition distribution breadth index.

As used herein, the term "intramolecular composition distribution" (also "IntraCD" or "intramolecular CD") defines the compositional variation, in terms of ethylene, within a copolymer chain. It is expressed as the ratio of the alpha-olefin to ethylene along the segments of the same chain.

As used herein, the term "MIA" means the melt index, in units of g/10 min or dg/min, of the first ethylene-based copolymer.

As used herein, the term "MIB" means the melt index, in units of g/10 min or dg/min, of the second ethylene-based copolymer.

As used herein, the term "MnA" means the number-average molecular weight of the first ethylene-based copolymer, as measured by GPC.

As used herein, the term "MnB" means the number-average molecular weight of the second ethylene-based copolymer, as measured by GPC.

As used herein, the term "MwA" means the weight-average molecular weight of the first ethylene-based copolymer in units of grams/mole in terms of polystyrene, as measured by GPC.

As used herein, the term "MwB" means the weight-average molecular weight of the second ethylene-based copolymer in units of grams/mole in terms of polystyrene, as measured by GPC.

As used herein, the term "MWD" means the molecular weight distribution, or ratio of weight-average molecular weight (Mw) to number-average molecular weight (Mn).

As used herein, the term "melting point" means the highest peak among principal and secondary melting peaks as determined by DSC during the second melt, as discussed in further detail below.

As used herein, the term "polyene" means monomers or polymers having two or more unsaturations, e.g., dienes, trienes, and the like.

As used herein, the term "polypropylene" means a polymer made of at least 50% propylene units, preferably at least 70% propylene units, more preferably at least 80% propylene units, even more preferably at least 90% propylene units, even more preferably at least 95% propylene units or 100% propylene units.

As used herein, the term "substantially linear structure" means a polymer characterized as having less than 1 branch point pendant with a carbon chain larger than 19 carbon atoms per 200 carbon atoms along a backbone.

For purposes of this specification and the claims appended thereto, when a polymer or copolymer is referred to as comprising an olefin, including, but not limited to ethylene, propylene, and butene, the olefin present in such polymer or copolymer is the polymerized form of the olefin. For example, when a copolymer is said to have an "ethylene" content of 35-55 wt%, it is understood that the mer unit in the copolymer is derived from ethylene in the polymerization reaction and said derived units are present at 35-55 wt%, based upon the weight of the copolymer.

Polymeric Compositions

In some embodiments of the invention, the rheology modifiers for lubrication fluids described herein comprise compositionally disperse polymer blends and/or crystallinity disperse polymer blends. These polymer blends comprise a first ethylene-based copolymer and a second ethylene-based copolymer. Unless otherwise specified, all references to first ethylene-based copolymer and second ethylene-based copolymer refer to both compositionally disperse polymer blends and crystallinity disperse polymer blends.

The first ethylene-based copolymer, having a relatively lower ethylene content, is a copolymer of ethylene, an alpha-olefin comonomer, and optionally an internal olefin and optionally a polyene, such as a diene.

The second ethylene-based copolymer, having a relatively higher ethylene content, is a copolymer of ethylene, an alpha-olefin and optionally an internal olefin and optionally a polyene such as a diene.

The polymer blends of the invention comprise from 35 to 65 wt% of a first ethylene-based copolymer, with the balance of the blend comprising the second ethylene-based copolymer. In some embodiments, the blend comprises from 38 to 62 wt% of the first ethylene-based copolymer and from 38 to 62 wt% of the second ethylene-based copolymer. In further embodiments, the blend comprises from 40 to 60 wt% of the first ethylene-based copolymer and from 40 to 60 wt% of the second ethylene-based copolymer.

For compositionally disperse polymer blends, the first ethylene-based copolymer is characterized by an ethylene weight percent (EA).

For crystallinity disperse polymer blends, the first ethylene-based copolymer is characterized by a heat of fusion (HA).

The first ethylene-based copolymer may be further characterized by a melt index (MIA), a number-average molecular weight (MnA), and a weight-average molecular weight (MwA).

In some embodiments, the EA of the first ethylene-based copolymer (in wt%) is in the range of $44 \leq EA \leq 52$, or $45 \leq EA \leq 51$, or $46 \leq EA \leq 50$.

In the same or other embodiments, the HA of the first ethylene-based copolymer (in J/g) is in the range of $0 \leq HA \leq 15$, or $0 \leq HA \leq 10$, or $0 \leq HA \leq 5$.

For compositionally disperse polymer blends, the second ethylene-based copolymer is characterized by an ethylene weight percent (EB).

For crystallinity disperse polymer blends, the second ethylene-based copolymer is characterized by a heat of fusion (HB).

The second ethylene-based copolymer may be further characterized by a melt index (MIB), a number-average molecular weight (MnB), and a weight-average molecular weight (MwB).

In some embodiments, the EB of the second ethylene-based copolymer (in wt%) is in the range of $68 \leq EB \leq 75$, or $69 \leq EB \leq 74$, or $70 \leq EB \leq 73$.

In the same or other embodiments, the HB of the second ethylene-based copolymer (in J/g) is in the range of $40 < HB \leq 65$, or $42 < HB \leq 62$, or $45 < HB \leq 60$.

In some embodiments of the compositionally disperse polymer blend, the ethylene weight percent EA of the first ethylene-based copolymer may be less than the ethylene weight percent EB of the second ethylene-based copolymer.

In some embodiments, the compositionally disperse polymer blends may be characterized by the difference in the ethylene weight percent between the second and first ethylene-based copolymers, EB and EA. In some embodiments, $EB - EA \geq 17$, or $EB - EA \geq 19$, or $EB - EA \geq 21$, or $EB - EA \geq 23$. In some embodiments, the difference in ethylene weight percent, EB and EA, is in the range of $17 \leq EB - EA \leq 25$.

In some embodiments of the crystallinity disperse polymer blends, the first melt heat of fusion HA of the first ethylene-based copolymer may be less than the first melt heat of fusion HB of the second ethylene-based copolymer.

In some embodiments, the crystallinity disperse polymer blends may be characterized by the difference between the heats of fusion of the second ethylene-based copolymer and the first ethylene-based copolymer, HB and HA. In some embodiments, $HB - HA \geq 15$; in other embodiments, $HB - HA \geq 25$; in still other embodiments, $HB - HA \geq 35$; in still yet other embodiments, $HB - HA \geq 45$. In some embodiments, the difference in the heat of fusion, HB and HA, is in the range of $35 \leq HB - HA \leq 60$.

The compositionally disperse and/or crystallinity disperse polymer blends may be further characterized by the ratio of the melt index of the first ethylene-based copolymer to the melt index of the second ethylene-based copolymer, MIA/MIB. In some embodiments, MIA/MIB is less than or equal to 3, less than or equal to 2, less than or equal to 1.

The compositionally disperse and/or crystallinity disperse polymer blends may be further characterized by the absolute value of the difference in the melt index of the first ethylene-based copolymer MIA and the melt index of the second ethylene-based copolymer MIB. In some embodiments, | MIA - MIB | ≤ 3.0, or | MIA - MIB | ≤ 2.5, or | MIA - MIB | ≤ 2.0, or | MIA - MIB | ≤ 1.5, or | MIA - MIB | ≤ 1.1, or | MIA - MIB | ≤ 1.0.

The first and second ethylene-based copolymers may be characterized by a weight-average molecular weight (MwA and MwB, respectively) in the range of from 80,000 to 130,000, or to 120,000, or to 110,000, or to 100,000, or to 90,000.

The first and second ethylene-based copolymers may be characterized by a molecular weight distribution (MWD). Each of the first and second ethylene-based copolymers has an MWD of less than 3.0, or less than 2.4, or less than 2.2, or less than 2.0. Preferably, the MWD of each copolymer is from 1.80 to 1.95.

The MFR of the compositionally disperse and/or crystallinity disperse polymer blends will be intermediate to the MFR of the lower and higher ethylene content copolymers when these copolymers have different MFRs. In some embodiments of the present invention, the first and second ethylene-based copolymers each have an MFR of from 0.2 to 25.

The first and second ethylene-based copolymers each comprise ethylene and one or more comonomers. The comonomers are selected from the group consisting of $C_3$ to $C_{20}$ alpha-olefins and mixtures thereof. Preferably, the comonomer in each copolymer is propylene, butene, hexene, octene or mixtures thereof.

In some embodiments, the first and second ethylene-based copolymers may each further comprise a polyene monomer. In such embodiments, each copolymer may further comprise up to 5 mole%, up to 4 mole%, up to 3 mole%, up to 2 mole%, or up to 1 mole% polyene-derived units.

In some embodiments, the first and second ethylene-based copolymers may each comprise one or more polymer fractions having a different Mn, a different Mw, or a different MWD.

In some embodiments, the first and/or second ethylene-based copolymers may have different comonomer insertion sequences.

In some embodiments, the first and/or second ethylene-based copolymers of a compositionally disperse polymer blend have a substantially linear structure.

The substantially linear structure of the first and/or second ethylene-based copolymer has less than 1 branch point pendant with a carbon chain larger than 19 carbon atoms per 200 carbon atoms along a backbone, less than 1 branch point pendant with a carbon chain larger than 19 carbon atoms per 300 branch points, less than 1 branch point pendant with a carbon chain larger than 19 carbon atoms per 500 carbon atoms, or less than 1 branch point pendant with a carbon chain larger than 19 carbon atoms per 1000 carbon atoms, notwithstanding the presence of branch points due to incorporation of the comonomer.

The discrete ethylene-based copolymers can be combined such that the first ethylene-based copolymer, which is the less crystalline ethylene-based copolymer (and typically the ethylene-based copolymer with the lower wt% ethylene) can be present in an amount of from 35 to 65 wt%, based on the combined weight of the first and second ethylene-based copolymers. In one or more embodiments, the first ethylene-based copolymer can be present in an amount from 38 to 62 wt%, or 40 to 60 wt%, based on the total weight of the first and second copolymers.

The polymer blend can have an overall concentration or content of ethylene-derived units ranging from 55 mol% to 75 mol%. For example, the polymer blend can have a concentration of ethylene-derived units ranging from a low of 58 mol%, 72 mol%, or 60 mol% to a high of 65 mol%, 68 mol%, 70 mol%, or 72 mol%. The MFR of the polymer blend can be intermediate to the MFR of the lowest and highest ethylene content copolymers when the copolymers have different MFRs.

Comonomer Components

Suitable comonomers include, but are not limited to, propylene ($C_3$) and other alpha-olefins, such as $C_4$ to $C_{20}$ alpha-olefins (also referred to herein as "a-olefins"), and preferably propylene and $C_4$ to $C_{12}$ $\alpha$-olefins. The $\alpha$-olefin comonomer can be linear or branched, and two or more comonomers can be used, if desired. Thus, reference herein to "an alpha-olefin comonomer" includes one, two, or more alpha-olefin comonomers.

Examples of suitable comonomers include propylene, linear $C_4$ to $C_{12}$ $\alpha$-olefins, and $\alpha$-olefins having one or more $C_1$ to $C_3$ alkyl branches. Specific examples include: propylene; 1-butene; 3-methyl-1-butene; 3,3-dimethyl-1-butene; 1-pentene; 1-pentene with one or more methyl, ethyl or propyl substituents; 1-hexene with one or more methyl, ethyl or propyl substituents; 1-heptene with one or more methyl, ethyl or propyl substituents; 1-octene with one or more methyl, ethyl or propyl substituents; 1-nonene with one or more methyl, ethyl or propyl substituents; ethyl, methyl or dimethyl-substituted 1-decene, or 1-dodecene. Preferred comonomers include: propylene, 1-butene, 1-pentene, 3-methyl-1-butene, 1-hexene, 3-methyl-1-pentene, 4-methyl-1-pentene, 3,3-dimethyl-1-butene, 1-heptene, 1-hexene with a methyl substituents on any of $C_3$ to $C_5$, 1-pentene with two methyl substituents in any stoichiometrically acceptable combination

on $C_3$ or $C_4$, 3-ethyl-1-pentene, 1-octene, 1-pentene with a methyl substituents on any of $C_3$ or $C_4$, 1-hexene with two methyl substituents in any stoichiometrically acceptable combination on $C_3$ to $C_5$, 1-pentene with three methyl substituents in any stoichiometrically acceptable combination on $C_3$ or $C_4$, 1-hexene with an ethyl substituents on $C_3$ or $C_4$, 1-pentene with an ethyl substituents on $C_3$ and a methyl substituents in a stoichiometrically acceptable position on $C_3$ or $C_4$, 1-decene, 1-nonene, 1-nonene with a methyl substituents on any of $C_3$ to $C_9$, 1-octene with two methyl substituents in any stoichiometrically acceptable combination on $C_3$ to $C_7$, 1-heptene with three methyl substituents in any stoichiometrically acceptable combination on $C_3$ to $C_6$, 1-octene with an ethyl substituents on any of $C_3$ to $C_7$, 1-hexene with two ethyl substituents in any stoichiometrically acceptable combination on $C_3$ or $C_4$, and 1-dodecene.

Other suitable comonomers can include internal olefins. Preferred internal olefins are cis 2- butene and trans 2- butene. Other internal olefins are contemplated. When an internal olefin is present, negligible amounts, such as 2 wt% or less of the total amount of the internal olefin, can be present in the low ethylene-content copolymer, and most of the internal olefin, such as 90 wt% or more of the total amount of the internal olefin, can be present in the high ethylene-content copolymer.

Suitable comonomers can also include one or more polyenes. Suitable polyenes can include non-conjugated dienes, preferably those that are straight chain, hydrocarbon diolefins or cycloalkenyl-substituted alkenes, having 6 to 15 carbon atoms, for example: (a) straight chain acyclic dienes, such as 1,4-hexadiene and 1,6-octadiene; (b) branched chain acyclic dienes, such as 5-methyl-1, 4-hexadiene; 3,7-dimethyl-1,6; (c) single ring alicyclic dienes, such as 1,4-cyclohexadiene; 1,5-cyclo-octadiene and 1,7-cyclododecadiene; (d) multi-ring alicyclic fused and bridged ring dienes, such as tetrahydroindene, norbornadiene, methyl-tetrahydroindene, dicyclopentadiene (DCPD), bicyclo-(2.2.1)-hepta-2,5-diene, alkenyl, alkylidene, cycloalkenyl and cycloalkylidene norbornenes, such as 5-methylene-2-norbornene (MNB), 5-propenyl-2-norbornene, 5-isopropylidene-2-norbornene, 5-(4-cyclopentenyl)-2-norbornene, 5-cyclohexylidene-2-norbornene, and 5-vinyl-2-norbornene (VNB); and (e) cycloalkenyl-substituted alkenes, such as vinyl cyclohexene, allyl cyclohexene, vinyl cyclooctene, 4-vinyl cyclohexene, allyl cyclodecene; and vinyl cyclododecene. Of the non-conjugated dienes typically used, the preferred dienes are dicyclopentadiene (DCPD), 1,4-hexadiene, 1,6-octadiene; 5-methyl-1,4-hexadiene; 3,7-dimethyl-1,6-octadiene; 5-methylene-2-norbornene, 5-ethylidene-2-norbornene (ENB), and tetracyclo ($\Delta$-11,12) 5,8 dodecene. It is preferred to use dienes that do not lead to the formation of long chain branches, and non- or lowly branched polymer chains are preferred. Other polyenes that can be used include cyclopentadiene and octatetraene; and the like.

When a polyene is present, the ethylene-based copolymers can include up to 5 mole%, up to 4 mole%, up to 3 mole%, up to 2 mole%, and up to 1 mole% polyene-derived units. In some embodiments, the amount of polyene, when present, can range from 0.5 mole% to 4 mole%; 1.0 mole% to 3.8 mole%; or 1.5 mole% to 2.5 mole%.

Catalyst

The terms "metallocene" and "metallocene catalyst precursor," as used herein, refer to compounds possessing a transition metal M, with cyclopentadienyl (Cp) ligands, at least one non-cyclopentadienyl-derived ligand X, and zero or one heteroatom-containing ligand Y, the ligands being coordinated to M and corresponding in number to the valence thereof. The metallocene catalyst precursors are generally neutral complexes but when activated with a suitable co-catalyst yield an active metallocene catalyst, which refers generally to an organometallic complex with a vacant coordination site that can coordinate, insert, and polymerize olefins. The metallocene catalyst precursor is preferably one of, or a mixture of metallocene compounds, of either or both of the following types:

(1) cyclopentadienyl (Cp) complexes that have two Cp ring systems for ligands. The Cp ligands form a sandwich complex with the metal and can be free to rotate (unbridged) or locked into a rigid configuration through a bridging group. The Cp ring ligands can be like or unlike unsubstituted, substituted, or a derivative thereof such as a heterocyclic ring system, which may be substituted, and the substitutions can be fused to form other saturated or unsaturated rings systems such as tetrahydroindenyl, indenyl, or fluorenyl ring systems. These cyclopentadienyl complexes have the general formula:

$$(Cp^1R^1{}_m)R^3{}_n(Cp^2R^2{}_p)MX_q$$

where $Cp^1$ of ligand $(Cp^1R^1{}_m)$ and $Cp^2$ of ligand $(Cp^2R^2{}_p)$ are the same or different cyclopentadienyl rings; $R^1$ and $R^2$ each is, independently, a halogen or a hydrocarbyl, halocarbyl, hydrocarbyl-substituted organometalloid or halocarbyl-substituted organometalloid group containing up to 20 carbon atoms; m is 0 to 5; p is 0 to 5; and two $R^1$ and/or $R^2$ substituents on adjacent carbon atoms of the cyclopentadienyl ring associated there with can be joined together to form a ring containing from 4 to 20 carbon atoms; $R^3$ is a bridging group; n is the number of atoms in the direct chain between the two ligands and is 0 to 8, preferably 0 to 3; M is a transition metal having a valence of from 3 to 6, preferably from group 4, 5, or 6 of the periodic table of the elements and is preferably in its highest oxidation state; each X is a non-cyclopentadienyl ligand and is, independently, a halogen or a hydrocarbyl, oxyhydrocarbyl, halocarbyl, hydrocarbyl-substituted organometalloid, oxyhydrocarbyl-substituted organometalloid or halocarbyl-substituted organometalloid group containing up to 20 carbon atoms; q is equal to the valence of M minus 2; and (2) monocyclopentadienyl complexes that have only one Cp ring system as a ligand. The Cp ligand forms a half-sandwich complex with the metal and can be free to rotate (unbridged) or locked into a rigid configuration through a bridging group to a heteroatom-containing ligand. The Cp ring ligand can be unsubstituted, substituted, or a derivative thereof such as a heterocyclic ring system which may be substituted, and the substitutions can be fused to form other saturated or unsaturated rings systems such as tetrahydroindenyl, indenyl, or fluorenyl ring systems. The heteroatom containing ligand is bound to both the metal and optionally to the Cp ligand through the bridging group. The heteroatom itself is an atom with a coordination number of three from group VA or VIA of the periodic table of the elements. These mono-cyclopentadienyl complexes have the general formula:

$$(Cp^1R^1_m)R^3_n(Y_rR^2) MX_s$$

wherein $R^1$ is, each independently, a halogen or a hydrocarbyl, halocarbyl, hydrocarbyl-substituted organometalloid or halocarbyl-substituted organometalloid group containing up to 20 carbon atoms; m is 0 to 5; and two $R^1$ substituents on adjacent carbon atoms of the cyclopentadienyl ring associated therewith can be joined together to form a ring containing from 4 to 20 carbon atoms; $R^3$ is a bridging group; n is 0 to 3; M is a transition metal having a valence of from 3 to 6, preferably from group 4, 5, or 6 of the periodic table of the elements and is preferably in its highest oxidation state; Y is a heteroatom containing group in which the heteroatom is an element with a coordination number of three from Group VA or a coordination number of two from group VIA preferably nitrogen, phosphorous, oxygen, or sulfur; $R^2$ is a radical selected from a group consisting of $C_1$ to $C_{20}$ hydrocarbon radicals, substituted $C_1$ to $C_{20}$ hydrocarbon radicals, where one or more hydrogen atoms is replaced with a halogen atom, and when Y is three coordinate and unbridged there may be two R groups on Y each independently a radical selected from a group consisting of $C_1$ to $C_{20}$ hydrocarbon radicals, substituted $C_1$ to $C_{20}$ hydrocarbon radicals, where one or more hydrogen atoms is replaced with a halogen atom, and each X is a non-cyclopentadienyl ligand and is, independently, a halogen or a hydrocarbyl, oxyhydrocarbyl, halocarbyl, hydrocarbyl-substituted organometalloid, oxyhydrocarbyl-substituted organometalloid or halocarbyl-substituted organometalloid group containing up to 20 carbon atoms; s is equal to the valence of M minus 2.

Examples of suitable biscyclopentadienyl metallocenes of the type described in group 1 above can be as discussed and described in U.S. Patent Nos. 5,324,800; 5,198,401; 5,278,119; 5,387,568; 5,120,867; 5,017,714; 4,871,705; 4,542,199; 4,752,597; 5,132,262; 5,391,629; 5,243,001; 5,278,264; 5,296,434; and 5,304,614.

Noncoordinating Anions

The term "noncoordinating anion" (NCA) means an anion that either does not coordinate to the transition metal cation or that is only weakly coordinated to the cation thereby remaining sufficiently labile to be displaced by a neutral Lewis base. "Compatible" noncoordinating anions are those that are not degraded to neutrality when the initially formed complex decomposes. Further, the anion will not transfer an anionic substituents or fragment to the cation so as to cause it to form a neutral four coordinate metallocene compound and a neutral by-product from the anion. Noncoordinating anions useful in accordance with this invention are those that are compatible, stabilize the metallocene cation in the sense of balancing its ionic charge in a +1 state, and yet retain sufficient lability to permit displacement by an ethylenically or acetylenically unsaturated monomer during polymerization. Additionally, the anions useful in this invention will be large or bulky in the sense of sufficient molecular size to largely inhibit or prevent neutralization of the metallocene cation by Lewis bases other than the polymerizable monomers that may be present in the polymerization process. Typically the anion will have a molecular size of greater than or equal to 4 angstroms. NCAs are preferred because of their ability to produce a target molecular weight polymer at a higher temperature than tends to be the case with other activation systems such as alumoxane.

Descriptions of ionic catalysts for coordination polymerization using metallocene cations activated by non-coordinating anions appear in the early work in EP-A-0 277 003; EP-A-0 277 004; WO92/00333; U.S. Patent Nos. 5,198,401 and 5,278,119. These references disclose a preferred method of preparation where metallocenes (bisCp and monoCp) are protonated by an anionic precursors such that an alkyl/hydride group is abstracted from a transition metal to make it both cationic and charge-balanced by the non-coordinating anion. The use of ionizing ionic compounds not containing an active proton but capable of producing both the active metallocene cation and a noncoordinating anion are also known. See, e.g., EP-A-0 426 637, EP-A-0 573 403 and U.S. Patent No. 5,387,568. Reactive cations other than Bronsted acids capable of ionizing the metallocene compounds include ferrocenium triphenylcarbonium and triethylsilylinium cations. Any metal or metalloid capable of forming a coordination complex that is resistant to degradation by water (or other Bronsted or Lewis Acids) may be used or contained in the anion of the second activator compound. Suitable metals include, but are not limited to, aluminum, gold, platinum and the like. Suitable metalloids include, but are not limited to, boron, phosphorus, silicon and the like.

An additional method for making the ionic catalysts uses ionizing anionic precursors which are initially neutral Lewis acids but form the cation and anion upon ionizing reaction with the metallocene compounds, for example, tris(pentafluorophenyl) boron acts to abstract an alkyl, hydride or silyl ligand to yield a metallocene cation and stabilizing non-coordinating anion. See, e.g., EP-A-0 427 697 and EP-A-0 520 732. Ionic catalysts for addition polymerization can also be prepared by oxidation of the metal centers of transition metal compounds by anionic precursors containing metallic oxidizing groups along with the anion groups. See, e.g., EP-A-0 495 375.

Non-Ionic Activators

Where the metal ligands include halide moieties, for example, (methyl-phenyl) silylene (tetra-methyl-cyclopentadienyl) (tert-butyl-amido) zirconium dichloride, which are not capable of ionizing abstraction under standard conditions, they can be converted via known alkylation reactions with organometallic compounds such as lithium or aluminum hydrides or alkyls, alkylalumoxanes, Grignard reagents, etc. See, e.g., EP-A-0 500 944, EP-A1-0 570 982 and EP-A1-0 612 768 for processes describing the reaction of alkyl aluminum compounds with dihalide substituted metallocene compounds prior to or with the addition of activating anionic compounds. For example, an aluminum alkyl compound may be mixed with the metallocene prior to its introduction into the reaction vessel. Since the alkyl aluminum is also suitable as a scavenger its use in excess of that normally stoichiometrically required for alkylation of the metallocene will permit its addition to the reaction solvent with the metallocene compound. Normally, alumoxane would not be added with the metallocene so as to avoid premature activation, but can be added directly to the reaction vessel in the presence of the polymerizable monomers when serving as both scavenger and alkylating activator. Alumoxanes may also fulfill a scavenging function.

Known alkylalumoxanes are additionally suitable as catalyst activators, particularly for those metallocenes comprising halide ligands. The alumoxane component useful as catalyst activator typically is an oligomeric aluminum compound represented by the general formula (R--Al--O) n, which is a cyclic compound, or R(R--Al--O)nAlR$_2$, which is a linear compound. In the general alumoxane formula R is a C$_1$ to C$_5$ alkyl radical, for example, methyl, ethyl, propyl, butyl or pentyl, and "n" is an integer from 1 to 50. Most preferably, R is methyl and "n" is at least 4, i.e., methylalumoxane (MAO). Alumoxanes can be prepared by various procedures known in the art. For example, an aluminum alkyl may be treated with water dissolved in an inert organic solvent, or it may be contacted with a hydrated salt, such as hydrated copper sulfate suspended in an inert organic solvent, to yield an alumoxane. Generally, however prepared, the reaction of an aluminum alkyl with a limited amount of water yields a mixture of the linear and cyclic species of the alumoxane.

Polymerization Process

Each discrete ethylene-based copolymer can be polymerized in a single, well stirred tank reactor in solution. The viscosity of the solution during polymerization can be less than 10000 cPs, or less than 7000 cPs, and preferably less than 500 cPs. The reactor is preferably a liquid filled, continuous flow, stirred tank reactor providing full back mixing for random copolymer production. Solvent, monomers, and catalyst(s) are fed to the reactor. When two or more reactors are utilized, solvent, monomers, and/or catalyst(s) is fed to the first reactor or to one or more additional reactors.

Reactors may be cooled by reactor jackets or cooling coils, autorefrigeration, prechilled feeds or combinations of all three to absorb the heat of the exothermic polymerization reaction. Autorefrigerated reactor cooling requires the presence of a vapor phase in the reactor. Adiabatic reactors with prechilled feeds are preferred in which the polymerization exotherm is absorbed by permitting a temperature rise of the polymerizing liquid.

Use of hydrogen to control molecular weight may be avoided or reduced, if desired. The reactor temperature may be used to control the molecular weight of the polymer fraction produced. In series operation, this gives rise to a temperature difference between reactors, which is helpful for controlling polymer molecular weight.

Reactor temperature can be selected depending upon the effect of temperature on catalyst deactivation rate and polymer properties and/or extent of monomer depletion. When using more than one reactor, generally temperatures should not exceed the point at which the concentration of catalyst in the second reactor is insufficient to make the desired polymer component in the desired amount. Therefore, reaction temperature can be determined by the details of the catalyst system.

In general, a single reactor or first reactor in a series will operate at a reactor temperature from 0°C to 200°C, or from 10°C to 110°C, or from 20°C to 90°C. Preferably, reaction temperatures are from 20°C to 90°C or from 20°C to 70°C. When using on or more additional reactors, the additional reactor temperature will vary from 40°C to 200°C, with 50°C to 140°C preferred, and 60°C to 120°C more preferred. Ranges from any of the recited lower limits to any of the recited upper limits are contemplated by the inventors and within the scope of the present description. In copolymerization techniques that utilize one or more bis-Cp catalysts with one or more mono-Cp catalysts, a lower reaction temperature is preferred for reactions utilizing mono-Cp catalyst when compared to the bis-Cp catalyst.

Reaction pressure is determined by the details of the catalyst system. In general a reactor, whether a single reactor or each of a series of reactors, operates at a reactor pressure of less than 2500 pounds per square inch (psi) (17.23 MPa), or less than 2200 psi (15.16 MPa) or less than 2000 psi (13.78 MPa). Preferably, reactor pressure is from atmospheric pressure to 2000 psi (13.78 MPa), or from 200 psi (1.38 MPa) to 2000 psi (13.78 MPa), or from 300 psi (2.07 MPa) to 1800 psi (12.40 MPa). Ranges from any of the recited lower limits to any of the recited upper limits are contemplated and within the scope of the present description.

In the case of less stable catalysts, catalyst can also be fed to a second reactor when the selected process uses reactors in series. Optimal temperatures can be achieved, particularly for series operation with progressively increasing polymerization temperature, by using bis cyclopentadienyl catalyst systems containing hafnium as the transition metal, especially those having a covalent, single atom bridge coupling the two cyclopentadienyl rings.

Particular reactor configurations and processes suitable for use in the processes described herein are described in detail in U.S. Patent No. 6,319,998 and U.S. Provisional Patent Application having Serial No. 60/243,192, which priority is claimed in U.S Patent No. 6,881,800.

Branching is introduced by the choice of polymerization catalysts or process. The copolymerization process may occur with or without hydrogen present. However, operation without hydrogen is preferred because it inhibits branching in the copolymers since it lead to chain ends which are completely or substantially saturated. Without being limited by theory, it is believed that these saturated polymers cannot participate in the principal branching pathway where preformed polymers with unsaturated chain ends are reincorporated into new growing chains, which lead to branched polymers.

In alternative embodiments, the first and second ethylene-based copolymers can be polymerized in an alkane solvent, either hexane in a solution process or propylene in a slurry process and finished to remove the solvent. The first and second ethylene-based copolymers can have a medium viscosity and a molecular weight in excess of that needed in the final lubricant formulation. For example, most of the traditional EPDM manufacturing plants cannot "finish" low viscosity polymers having the right viscosity for lubricant formulations. In another example, low viscosity copolymers tend to cold flow upon storage. The second example can be particularly true for amorphous copolymers, which have a lower plateau modulus. The bales are then processed by a series of steps to create the final lubricant composition.

In some embodiments, ethylene and a first comonomer can be polymerized in the presence of a first metallocene catalyst in a first polymerization reaction zone under first polymerization conditions to produce a first effluent comprising a first ethylene-based copolymer. Ethylene and a second comonomer can also be polymerized in the presence of a second metallocene catalyst in a second polymerization reaction zone under second polymerization conditions to produce a second effluent comprising a second ethylene-based copolymer. The resulting discrete copolymers can then be mixed or otherwise blended to provide the rheology modifier.

In one or more embodiments, the first and second polymerization conditions can be independently selected from the group consisting of slurry phase, solution phase and bulk phase. When the first and second polymerization conditions are solution phase, forming the polymer blend can further include substantial removal of the solvent from the first effluent, the second effluent, or both to produce a solid polymer blend.

In one or more embodiments, separate polymerizations can be performed in parallel with the effluent polymer solutions from three reactors combined downstream before the finishing. In another embodiment, separate polymerizations may be performed in series, where the effluent of one reactor is fed to the next reactor. In still another embodiment, the separate polymerization may be performed in the same reactor, preferably in sequential polymerizations.

The ethylene-based copolymers can be polymerized by a metallocene catalyst to form the first ethylene-based copolymer in one reactor and the second ethylene-based copolymer in another reactor. The first and second ethylene-based copolymers can be combined and then subjected to finishing steps to produce the polymer blend. The first ethylene-based copolymer can be made first; alternatively, the second ethylene-based copolymer can be made first in a series reactor configuration or the ethylene-based copolymers can be made simultaneously in a parallel reactor configuration.

The metallocene catalysts, and their use with non-coordinating ions and non-ionic activators used in the polymerization process can be as discussed and described in U.S. Provisional Patent Application having Serial No. 61/173,528, entitled "Ethylene-Based Copolymers and Lubricating Oil Compositions Containing the Same," bearing attorney docket number 2009EM079-PRV, filed on April 28, 2009.

Examples of suitable bis-cyclopentadienyl metallocenes, include, but are not limited to the type disclosed in U.S. Patent Nos. 5,324,800; 5,198,401; 5,278,119; 5,387,568; 5,120,867; 5,017,714; 4,871,705; 4,542,199; 4,752,597; 5,132,262; 5,391,629; 5,243,001; 5,278,264; 5,296,434; and 5,304,614.

Lubrication Oil Composition

Lubricating oil compositions containing the polymer blend and one or more base oils (or basestocks) are also provided. The basestock can be or include natural or synthetic oils of lubricating viscosity, whether derived from hydrocracking, hydrogenation, other refining processes, unrefined processes, or re-refined processes. The basestock can be or include used oil. Natural oils include animal oils, vegetable oils, mineral oils and mixtures thereof. Synthetic oils include hydrocarbon oils, silicon-based oils, and liquid esters of phosphorus-containing acids. Synthetic oils may be produced by Fischer-Tropsch gas-to-liquid synthetic procedure as well as other gas-to-liquid oils.

In one embodiment, the basestock is or includes a polyalphaolefin (PAO) including a PAO-2, PAO-4, PAO-5, PAO-6, PAO-7 or PAO-8 (the numerical value relating to Kinematic Viscosity at 100°C). Preferably, the polyalphaolefin is prepared from dodecene and/or decene. Generally, the polyalphaolefin suitable as an oil of lubricating viscosity has a viscosity less than that of a PAO-20 or PAO-30 oil. In one or more embodiments, the basestock can be defined as specified in the American Petroleum Institute (API) Base Oil Interchangeability Guidelines. For example, the basestock can be or include an API Group I, II, III, IV, V oil or mixtures thereof.

In one or more embodiments, the basestock can include oil or blends thereof conventionally employed as crankcase lubricating oils. For example, suitable basestocks can include crankcase lubricating oils for spark-ignited and compression-ignited internal combustion engines, such as automobile and truck engines, marine and railroad diesel engines, and the like. Suitable basestocks can also include those oils conventionally employed in and/or adapted for use as power transmitting fluids such as automatic transmission fluids, tractor fluids, universal tractor fluids and hydraulic fluids, heavy duty hydraulic fluids, power steering fluids and the like. Suitable basestocks can also be or include gear lubricants, industrial oils, pump oils and other lubricating oils.

In one or more embodiments, the basestock can include not only hydrocarbon oils derived from petroleum, but also include synthetic lubricating oils such as esters of dibasic acids; complex esters made by esterification of monobasic acids, polyglycols, dibasic acids and alcohols; polyolefin oils, etc. Thus, the lubricating oil compositions described can be suitably incorporated into synthetic base oil basestocks such as alkyl esters of dicarboxylic acids, polyglycols and alcohols; polyalpha-olefins; polybutenes; alkyl benzenes; organic esters of phosphoric acids; polysilicone oils; etc. The lubricating oil composition can also be utilized in a concentrate form, such as from 1 wt% to 49 wt% in oil, e.g., mineral lubricating oil, for ease of handling, and may be prepared in this form by carrying out the reaction of the invention in oil as previously described.

The lubrication oil composition can include a basestock and one or more compositionally disperse polymer blends and/or one or more crystallinity disperse polymer blends, and optionally, a pour point depressant. The lubrication oil composition can have a thickening efficiency greater than 1.5, or greater than 1.7, or greater than 1.9, or greater than 2.2, or greater than 2.4 or greater than 2.6. The lubrication oil composition can have a shear stability index less than 55, or less than 45, or less than 35, or less than 30, or less than 25, or less than 20, or less than 15. The lubrication oil composition can have a complex viscosity at -35°C of less than 500, or less than 450, or less than 300, or less than 100, or less than 50, or less 20, or less than 10 centistokes (cSt). The lubrication oil composition can have a Mini Rotary Viscometer (MRV) viscosity at -35°C in a 10W-50 formulation of less than 60,000 cps according to ASTM 1678. The lubrication oil composition can have any combination of desired properties. For example, the lubrication oil composition can have a thickening efficiencies greater than 1.5 or greater than 2.6, a shear stability index of less than 55 or less than 35 or less than 25, a complex viscosity at -35°C of less than 500 cSt or less than 300 cSt or less than 50 cSt, and/or a Mini Rotary Viscometer (MRV) viscosity at -35°C in a 10W-50 formulation of less than 60,000 cps according to ASTM 1678.

The lubrication oil composition preferably comprises 2.5 wt%, or 1.5 wt%, or 1.0 wt% or 0.5 wt% of the compositionally disperse and/or crystallinity disperse polymer blend. In some embodiments, the amount of the polymer blend in the lubrication oil composition can range from a low of 0.5 wt%, 1 wt%, or 2 wt% to a high of 2.5 wt%, 3 wt%, 5 wt%, or 10 wt%.

Oil Additives

The lubricating oil compositions of the invention can optionally contain one or more conventional additives, such as, for example, pour point depressants, antiwear agents, antioxidants, other viscosity-index improvers, dispersants, corrosion inhibitors, anti-foaming agents, detergents, rust inhibitors, friction modifiers, and the like.

Corrosion inhibitors, also known as anti-corrosive agents, reduce the degradation of the metallic parts contacted by the lubricating oil composition. Illustrative corrosion inhibitors include phosphosulfurized hydrocarbons and the products obtained by reaction of a phosphosulfurized hydrocarbon with an alkaline earth metal oxide or hydroxide, preferably in the presence of an alkylated phenol or of an alkylphenol thioester, and also preferably in the presence of carbon dioxide. Phosphosulfurized hydrocarbons are prepared by reacting a suitable hydrocarbon such as a terpene, a heavy petroleum fraction of a $C_2$ to $C_6$ olefin polymer such as polyisobutylene, with from 5 to 30 wt% of a sulfide of phosphorus for 1/2 to 15 hours, at a temperature in the range of 66°C to 316°C. Neutralization of the phosphosulfurized hydrocarbon may be effected in the manner known by those skilled in the art.

Oxidation inhibitors, or antioxidants, reduce the tendency of mineral oils to deteriorate in service, as evidenced by the products of oxidation such as sludge and varnish-like deposits on the metal surfaces, and by viscosity growth. Such oxidation inhibitors include alkaline earth metal salts of alkylphenolthioesters having $C_5$ to $C_{12}$ alkyl side chains, e.g., calcium nonylphenate sulfide, barium octylphenate sulfide, dioctylphenylamine, phenylalphanaphthylamine, phosphosulfurized or sulfurized hydrocarbons, etc. Other oxidation inhibitors or antioxidants useful in this invention include oil-soluble copper compounds, such as described in U.S. Patent No. 5,068,047.

Friction modifiers serve to impart the proper friction characteristics to lubricating oil compositions such as automatic transmission fluids. Representative examples of suitable friction modifiers are found in U.S. Patent No. 3,933,659, which discloses fatty acid esters and amides; U.S. Patent No. 4,176,074 which describes molybdenum complexes of polyisobutenyl succinic anhydride-amino alkanols; U.S. Patent No. 4,105,571 which discloses glycerol esters of dimerized fatty acids; U.S. Patent No. 3,779,928 which discloses alkane phosphonic acid salts; U.S. Patent No. 3,778,375 which discloses reaction products of a phosphonate with an oleamide; U.S. Patent No. 3,852,205 which discloses S-carboxyalkylene hydrocarbyl succinimide, S-carboxyalkylene hydrocarbyl succinamic acid and mixtures thereof; U.S. Patent No. 3,879,306 which discloses N(hydroxyalkyl)alkenyl-succinamic acids or succinimides; U.S. Patent No. 3,932,290 which discloses reaction products of di-(lower alkyl) phosphites and epoxides; and U.S. Patent No. 4,028,258 which discloses the alkylene oxide adduct of phosphosulfurized N-(hydroxyalkyl) alkenyl succinimides. Preferred friction modifiers are succinate esters, or metal salts thereof, of hydrocarbyl substituted succinic acids or anhydrides and thiobis-alkanols such as described in U.S. Patent No. 4,344,853.

Dispersants maintain oil insolubles, resulting from oxidation during use, in suspension in the fluid, thus preventing sludge flocculation and precipitation or deposition on metal parts. Suitable dispersants include high molecular weight N-substituted alkenyl succinimides, the reaction product of oil-soluble polyisobutylene succinic anhydride with ethylene amines such as tetraethylene pentamine and borated salts thereof. High molecular weight esters (resulting from the esterification of olefin substituted succinic acids with mono or polyhydric aliphatic alcohols) or Mannich bases from high molecular weight alkylated phenols (resulting from the condensation of a high molecular weight alkylsubstituted phenol, an alkylene polyamine and an aldehyde such as formaldehyde) are also useful as dispersants.

Pour point depressants ("ppd"), otherwise known as lube oil flow improvers, lower the temperature at which the fluid will flow or can be poured. Any suitable pour point depressant known in the art can be used. For example, suitable pour point depressants include, but are not limited to, one or more $C_8$ to $C_{18}$ dialkylfumarate vinyl acetate copolymers, polymethyl methacrylates, alkylmethacrylates and wax naphthalene.

Foam control can be provided by any one or more anti-foamants. Suitable anti-foamants include polysiloxanes, such as silicone oils and polydimethyl siloxane.

Anti-wear agents reduce wear of metal parts. Representatives of conventional antiwear agents are zinc dialkyldithiophosphate and zinc diaryldithiosphate, which also serves as an antioxidant.

Detergents and metal rust inhibitors include the metal salts of sulphonic acids, alkyl phenols, sulfurized alkyl phenols, alkyl salicylates, naphthenates and other oil soluble mono- and dicarboxylic acids. Highly basic (viz, overbased) metal sales, such as highly basic alkaline earth metal sulfonates (especially Ca and Mg salts) are frequently used as detergents.

Compositions containing these conventional additives can be blended with the basestock in amounts effective to provide their normal attendant function. Thus, typical formulations can include, in amounts by weight, a VI improver (from 0.01% to 12%); a corrosion inhibitor (from 0.01% to 5%); an oxidation inhibitor (from 0.01% to 5%); depressant (of from 0.01% to 5%); an anti-foaming agent (from 0.001% to 3%); an anti-wear agent (from 0.001% to 5%); a friction modifier (from 0.01% to 5%); a detergent/rust inhibitor (from 0.01 to 10%); and a base oil.

When other additives are used, it may be desirable, although not necessary, to prepare additive concentrates that include concentrated solutions or dispersions of the VI improver (in concentrated amounts), together with one or more of the other additives, such a concentrate denoted an "additive package," whereby several additives can be added simultaneously to the basestock to form a lubrication oil composition. Dissolution of the additive concentrate into the lubrication oil can be facilitated by solvents and by mixing accompanied with mild heating, but this is not essential. The additive-package can be formulated to contain the VI improver and optional additional additives in proper amounts to provide the desired concentration in the final formulation when the additive-package is combined with a predetermined amount of base oil.

Blending With Basestock Oils

Conventional blending methods are described in U.S. Patent No. 4,464,493. This conventional process requires passing the polymer through an extruder at elevated temperature for degradation of the polymer and circulating hot oil across the die face of the extruder while reducing the degraded polymer to particle size upon issuance from the extruder and into the hot oil. The pelletized, solid polymer compositions of the present invention, as described above, can be added by blending directly with the base oil so as give directly viscosity for the VI improver, so that the complex multi-step process of the prior art is not needed. The solid polymer composition can be dissolved in the basestock without the need for additional shearing and degradation processes.

The polymer compositions will be soluble at room temperature in lube oils at up to 10 percent concentration in order to prepare a viscosity modifier concentrate. Such concentrates, including eventually an additional additive package including the typical additives used in lube oil applications as described above, are generally further diluted to the final concentration (usually around 1%) by multi-grade lube oil producers. In this case, the concentrate will be a pourable homogeneous solid free solution.

The polymer blend compositions preferably have an SSI (determined according to ASTM D97) of from 10 to 50.

Specific Embodiments

In one or more specific embodiments, the present invention is directed to a polymer blend composition for use as a VI improver comprising a first ethylene-based copolymer and a second ethylene-based copolymer. The first copolymer has an ethylene content from 44 to 52 wt%, or from 45 to 51 wt%, or from 46 to 50 wt%; the second copolymer has an ethylene content from 68 to 75 wt%, or from 69 to 74 wt%, or from 70 to 73 wt%. Additionally, the ethylene content of the second copolymer is at least 17 wt%, or at least 19 wt%, or at least 21 wt% greater than that ethylene content of the first copolymer.

In the same or other embodiments, the first copolymer has a first melt heat of fusion from 0 to 15 J/g, or from 0 to 10 J/g, or from 0 to 5 J/g; the second copolymer has a first melt heat of fusion from 40 to 65 J/g, or from 42 to 62 J/g, or from 45 to 60 J/g. Additionally, the heat of fusion of the second copolymer is at least 25 J/g, or at least 35 J/g, or at least 45 J/g greater than that ethylene content of the first copolymer.

Further, the first and second copolymers have a weight-average molecular weight (Mw) in the range of from 80,000 to 130,000. The ratio of the melt index of the first copolymer to the melt index of the second copolymer is less than or equal to 3.0. Additionally, the composition comprises from 35 to 65 wt%, or from 38 to 62 wt%, or from 40 to 60 wt% of the first copolymer, based on the total weight of the first and second copolymers.

The first and second copolymers of the invention may each comprise one or more comonomers selected from the group consisting of $C_3$-$C_{20}$ alpha-olefins.

Further embodiments of the present invention include lubricating oil compositions comprising a lubricating oil basestock and any of the polymer blend compositions of the invention described herein.

Polymer Analyses

The ethylene contents as an ethylene weight percent ($C_2$ wt%) for the ethylene-based copolymers were determined according to ASTM D1903.

DSC Measurements of the crystallization temperature, $T_c$, and melting temperature, $T_m$, of the ethylene-based copolymers were measured using a TA Instruments Model 2910 DSC. Typically, 6-10 mg of a polymer was sealed in a pan with a hermetic lid and loaded into the instrument. In a nitrogen environment, the sample was first cooled to - 100°C at 20°C/min. It was then heated to 220°C at 10°C/min and melting data (first heat) were acquired. This provides information on the melting behavior under as-received conditions, which can be influenced by thermal history as well as sample preparation method. The sample was then equilibrated at 220°C to erase its thermal history. Crystallization data (first cool) were acquired by cooling the sample from the melt to -100°C at 10°C/min and equilibrated at -100°C. Finally the sample was heated again to 220°C at 10°C/min to acquire additional melting data (second heat). The endothermic melting transition (first and second heat) and exothermic crystallization transition (first cool) were analyzed for peak temperature and area under the peak. The term "melting point," as used herein, is the highest peak among principal and secondary melting peaks as determined by DSC during the second melt, discussed above. The thermal output was recorded as the area under the melting peak of the sample, which was typically at a maximum peak at 30°C to 175°C and occurred between the temperatures of 0°C and 200°C. The thermal output was measured in Joules as a measure of the heat of fusion. The melting point is recorded as the temperature of the greatest heat absorption within the range of melting of the sample.

Molecular weight (weight-average molecular weight, Mw, number-average molecular weight, Mn, and molecular weight distribution, Mw/Mn or MWD) were determined using a High Temperature Size Exclusion Chromatograph (either from Waters Corporation or Polymer Laboratories), equipped with a differential refractive index detector (DRI), an online light scattering (LS) detector, and a viscometer. Experimental details not described below, including how the detectors were calibrated, are described in: T. Sun, P. Brant, R. R. Chance, and W. W. Graessley, MACROMOLECULES, Volume 34, Number 19, pp. 6812-6820, (2001).

Three Polymer Laboratories PLgel 10mm Mixed-B columns were used. The nominal flow rate was 0.5 cm³/min, and the nominal injection volume was 300 μL. The various transfer lines, columns and differential refractometer (the DRI detector) were contained in an oven maintained at 145°C. Solvent for the SEC experiment was prepared by dissolving 6 grams of butylated hydroxy toluene as an antioxidant in 4 liters of Aldrich reagent grade 1, 2, 4 trichlorobenzene (TCB). The TCB mixture was then filtered through a 0.7 $\mu$m glass pre-filter and subsequently through a 0.1 $\mu$m Teflon filter. The TCB was then degassed with an online degasser before entering the SEC. Polymer solutions were prepared by placing dry polymer in a glass container, adding the desired amount of TCB, then heating the mixture at 160°C with continuous agitation for 2 hours. All quantities were measured gravimetrically. The TCB densities used to express the polymer concentration in mass/volume units are 1.463 g/ml at room temperature and 1.324 g/ml at 145°C. The injection concentration ranged from 1.0 mg/ml to 2.0 mg/ml, with lower concentrations being used for higher molecular weight samples. Prior to running each sample the DRI detector and the injector were purged. Flow rate in the apparatus was then increased to 0.5 ml/minute, and the DRI was allowed to stabilize for 8 to 9 hours before injecting the first sample. The LS laser was turned on from 1 hour to 1.5 hours before running samples.

The concentration, c, at each point in the chromatogram is calculated from the baseline-subtracted DRI signal, $I_{DRI}$, using the following equation:

$$c = K_{DRI}I_{DRI}/(dn/dc)$$

where $K_{DRI}$ is a constant determined by calibrating the DRI, and (dn/dc) is the same as described below for the light scattering (LS) analysis. Units on parameters throughout this description of the SEC method are such that concentration is expressed in $g/cm^3$, molecular weight is expressed in g/mole, and intrinsic viscosity is expressed in dL/g.

The light scattering detector used was a Wyatt Technology High Temperature mini-DAWN. The polymer molecular weight, M, at each point in the chromatogram is determined by analyzing the LS output using the Zimm model for static light scattering (M.B. Huglin, LIGHT SCATTERING FROM POLYMER SOLUTIONS, Academic Press, 1971):

$$\frac{K_o c}{\Delta R(\theta)} = \frac{1}{MP(\theta)} + 2A_2 c$$

Here, $\Delta R(\theta)$ is the measured excess Rayleigh scattering intensity at scattering angle $\theta$, c is the polymer concentration determined from the DRI analysis, $A_2$ is the second virial coefficient [for purposes of this invention and the claims thereto, $A_2$ = 0.0006 for propylene polymers and 0.001 otherwise], $P(\theta)$ is the form factor for a monodisperse random coil (M.B. Huglin, LIGHT SCATTERING FROM POLYMER SOLUTIONS, Academic Press, 1971), and $K_o$ is the optical constant for the system:

$$K_O = \frac{4\pi^2 n^2 (dn/dc)^2}{\lambda^4 N_A}$$

in which $N_A$ is Avogadro's number, and (dn/dc) is the refractive index increment for the system. The refractive index, n = 1.500 for TCB at 145°C and $\lambda$ = 690 nm. For purposes of this invention and the claims thereto (dn/dc) = 0.104 for propylene polymers and 0.1 otherwise.

A high temperature Viscotek Corporation viscometer, which has four capillaries arranged in a Wheatstone bridge configuration with two pressure transducers, was used to determine specific viscosity. One transducer measures the total pressure drop across the detector, and the other, positioned between the two sides of the bridge, measures a differential pressure. The specific viscosity, $\eta_s$, for the solution flowing through the viscometer is calculated from their outputs. The intrinsic viscosity, $[\eta]$, at each point in the chromatogram is calculated from the following equation:

$$\eta_s = c[\eta] + 0.3(c[\eta])^2$$

where c is concentration and was determined from the DRI output.

The branching index (g') is calculated using the output of the SEC-DRI-LS-VIS method as follows. The average intrinsic viscosity, $[\eta]_{avg}$, of the sample is calculated by:

$$[\eta]_{avg} = \frac{\sum c_i [\eta]_i}{\sum c_i}$$

where the summations are over the chromatographic slices, i, between the integration limits.

The branching index g' is defined as:

$$g' = \frac{[\eta]_{avg}}{kM_v^{\alpha}}$$

where, for purpose of this invention and claims thereto, $\alpha$ = 0.695 for ethylene, propylene, and butene polymers; and k = 0.000579 for ethylene polymers, k = 0.000228 for propylene polymers, and k = 0.000181 for butene polymers. $M_v$ is the viscosity-average molecular weight based on molecular weights determined by LS analysis.

Anton-Parr Low Temperature Solution Rheology (low temperature rheology) experiments were done on an Anton-Parr Model MCR501 rheometer using a 1" cone and plate setup. The cone has a nominal 1 degree angle and 50 micron gap. 100 microliters of sample is deposited on the bottom plate using a syringe-pipette. The cone is then lowered onto the plate so that the volume between the cone and plate is fully occupied by solution. The temperature is then lowered at a cooling rate of 1.5°C/min. while measuring the complex viscosity at an angular frequency of 0.1 radians/sec. applying a 10% strain and recording a value every minute. The viscosity at 0.1 rad/sec is then plotted as a function of temperature to observe the effect of gelation.

*Scanning Brookfield Viscometer*

The Scanning Brookfield Viscometer was operated according to ASTM D5133. 25 ml to 30 ml of the sample was poured into a glass stator to the fill line, which was immersed into an oil bath. The oil bath was programmed to cool from -5°C to -40°C at 1°C/hour scanning speed. The sample was preheated to 90°C for 90 minutes to remove thermal history. The temperature ramping program was set to cool from -5°C to -40°C at 1°C/hour scanning speed. In sample collection mode, the Gelation Index (GI) and maximum viscosity can be viewed. The torque versus temperature data set can be converted to a viscosity-temperature plot at which a gelation point and/or corresponding gelation index can be established.

Melt Index (MI) was measured according to ASTM D1238 at 190°C under a 2.16 kilogram load.

Melt Flow Rate (MFR) was measured according to ASTM D1238 at 230°C under a 2.16 kilogram load or a 21.6 kilogram load.

Thickening Efficiency (TE) was determined according to ASTM D445.

Shear Stability index (SSI) was determined according to ASTM D6278 at 30 and 90 cycles using a Kurt Orbahn machine.

Shear stress data was accomplished by first heating the sample to -15°C, and waiting for 15 minutes. Then while measuring the shear stress, applying a logarithmically increasing strain by varying the shear rate logarithmically from $10^{-3}$ to 10 with 20 points/decade and 1 second per point.

The number of branch points was determined by measuring the radius of gyration of polymers as a function of the molecular weight by the methods of size exclusion chromatography augmented by laser light scattering. These procedures are described in the publications "A Study of the Separation Principle in Size Exclusion Chromatography" by T. Sun, R. R. Chance, W. W. Graessley and D. J. Lohse in the journal MACROMOLECULES, 2004, Volume 37, Issue 11, pp. 4304-4312, and "Effect of Short Chain Branching on the Coil Dimensions of Polyolefins in Dilute Solution" by T. Sun, R. R. Chance, W. W. Graessley and P. Brant in the journal MACROMOLECULES, 2001, Volume 34, Issue 19, pp. 6812-6820.

Branching in polymers having narrow, and most probably, low polydispersity index with essentially uniform intramolecular and intermolecular distribution of composition can also be described by the ratio of the TE to the MFR@230°C measured at a load of 2.16Kg. High values of this parameter indicate low levels of branching while low levels indicate substantial levels of branching.

Intermolecular composition distribution, unlike CDBI, contemplates weight percent of copolymer content within a smaller range from a median total molar comonomer content, e.g., within 25 wt% of median. For example, for a Gaussian compositional distribution, 95.5% of the polymer, used herein for this example as "Polymer Fraction", is within 20 wt% ethylene of the mean if the standard deviation is 10%. The intermolecular composition distribution for the Polymer Fraction is 20 wt% ethylene for such a sample, i.e., 10% standard deviation yields 20 wt% intermolecular composition distribution.

Compositional Heterogeneity, both intermolecular-CD and intramolecular-CD can be determined by carbon-13 NMR. Conventional techniques for measuring intermolecular-CD and intramolecular-CD are described in MACROMOLECULES, H. N. Cheng, Masahiro Kakugo, entitled "Carbon-13 NMR analysis of compositional heterogeneity in ethylene-propylene copolymers," Volume 24, Issue 8, pp. 1724-1726, (1991), and in the publication MACROMOLECULES, C. Cozewith, entitled "Interpretation of carbon-13 NMR sequence distribution for ethylene-propylene copolymers made with heterogeneous catalysts," Volume 20, Issue 6, pp. 1237-1244, (1987).

Generally, conventional carbon-13 NMR measurements of diad and triad distribution is used to characterize the ethylene-based copolymer. Any conventional technique for measuring carbon-13 NMR may be utilized. For example, ethylene-based copolymer samples are dissolved in a solvent, e.g., trichlorobenzene at 4.5 wt% concentration. The carbon-13 NMR spectra are obtained at elevated temperature, e.g., 140°C, on a NMR spectrometer at 100 MHz. An exemplary spectrometer is a pulsed Fourier transform Varian XL-400 NMR spectrometer. Deuteriated o-dichlorobenezene is placed in a coaxial tube to maintain an internal lock signal. The following instrument conditions are utilized: pulse angle, 75°; pulse delay, 25 second; acquisition time, 0.5 second, sweep width, 16000 Hz. The carbon-13 NMR peak area measurements were determined by spectral integration. Diad and triad concentrations were calculated from the equations presented in MACROMOLECULES, Kakugo et al., Volume 15, Issue 4, pp. 1150-1152, (1982). The diad and triad concentrations were then normalized to give a mole fraction distribution. Polymer composition was calculated from the methane peaks, the methylene peaks, and the diad balance. These values may be considered individually or an average of the three values may be utilized. Unless stated otherwise, this application utilizes an average of these three values. The results are then compared to conventional model equations as disclosed in the above references.

One aspect of these measurements involves the determination of the reactivity ratios ($r_1r_2$) of the polymerization system for the ethylene-based polymers according to the procedures in the publication. Polymers that have a compositional heterogeneity, either intramolecular or intermolecular, have a much larger reactivity ratio than the polymers that have only a small or negligible amount.

Without being limited to theory or one method of calculation, it is believed that an one exemplary model for, so called ideal copolymerizations, is described by the terminal copolymerization model:

$$m = M(r_1M + 1)/(r_2 + M) \qquad (1)$$

wherein $r_1$ and $r_2$ are the reactivity ratios, $m$ is the ratio of monomers in the copolymer, $m_1/m_2$, $M$ is the ratio of monomers in the reactor, $M_1/M_2$, and the diad and triad concentrations follow first order Markov statistics. For this model, nine equations are derived that related to the diad and triad concentrations $P_{12}$ and $P_{21}$, the probability of propylene adding to an ethylene-ended chain, and the probability of propylene adding to a propylene-ended chain, respectively. Thus a fit of carbon-13 NMR data to these equations yields $P_{12}$ and $P_{21}$ as the model parameters from which $r_1$ and $r_2$ can be obtained from the relationships:

$$r_1M = (1 - P_{12})/P_{12}$$

$$r_2/M = (1 - P_{21})/P_{21}$$

The corresponding equations for random copolymerizations with $r_1r_2 = 1$ can also be used to simplify equation (1), above, to $m = r_1M$. The ethylene fraction in the polymer, E, is equal to $1-P_{12}$. This allows the diad and triad equations to be written in terms of polymer composition:

$$EE = E^2$$

$$EE = 2E(1 - E)$$

$$PP = (1 - E)^2$$

$$EEE = E^3$$

$$EEP = 2E^2(1 - E)$$

$$EPE = E^2(1 - E)$$

$$PEP = E(1 - E)^2$$

$$PPE = 2E(1 - E)^2$$

$$PPP = (1 - E)^3$$

Variations and extensions of these equations are provided in the references provided herein, including use of catalysts with different active sites, equations for estimating the number of catalyst species present, or complex models such as those with three or more species present, etc.

From these modeling equations, and those equations presented by MACROMOLECULES, C. Cozewith, Ver Strate, Volume 4, pp. 482-489, (1971), the average values of $\bar{r}_1$, $\bar{r}_2$, and $\overline{r_1r_2}$ arising from the copolymerization kinetics are given by:

$$\bar{r}_1 = (\Sigma r_{1i} f_i \,/\, G_i) \,/\, (\Sigma f_i \,/\, G_i)$$

$$\bar{r}_2 = (\Sigma r_{2i} f_i \,/\, G_i) \,/\, (\Sigma f_i \,/\, G_i)$$

$$\overline{r_1 r_2} = (\Sigma r_{1i} f_i \,/\, G_i)\,(\Sigma r_{2i} f_i \,/\, G_i) \,/\, (\Sigma f_i \,/\, G_i)^2$$

where

$$G_i = r_{1i} M \pm 2 + \underline{r_{2i}} \,/ M$$

These equations and the models presented in the references cited above may be utilized by those skilled in the art to characterize the ethylene-based copolymer composition distribution.

Further information and techniques for measuring intramolecular-CD are found in MACROMOLECULES, Randel, James C., Volume 11, Issue 1, pp. 33-36, (1978), MACROMOLECULES, Cheng, H.N., Volume 17, Issue 10, pp. 1950-1955, (1984), and MACROMOLECULES, Ray, G. Joseph, Johnson, Paul E., and Knox, Jack R., Volume 10 Issue 4, pp. 773-778, (1977). Such techniques are readily known to those skilled in the art of analyzing and characterizing olefin polymers.

Temperature Rising Elution Fractionation (TREF). The determination of intermolecular compositional heterogeneity was determined by the fractionation of the EP copolymer carried out by a Polymer Char TREF 200 based on a well-known principle that the solubility of a semi-crystalline copolymer is a strong function of temperature. A corresponding method is described in U.S. Patent No. 5,008,204. The instrument is a column packed with solid stainless-steel beads. The copolymer of interest was dissolved in 1,2 ortho-dichlorobenzene (oDCB) at 160°C for 60 min. Half of a milliliter (ml) of the polymer solution (concentration = 4-5 mg/ml) was injected in the column and it was stabilized there at 140°C for 45 min. The solution was cooled from 140°C to -15°C at 1°C/min and equilibrated at this temperature for 10 min. This caused the copolymer to crystallize out of the quiescent solution in successive layers of decreasing crystallinity onto the surface of the beads. Pure solvent (oDCB) was pumped for 5 min at -15°C at a flow rate of 1 ml/min through an infrared detector. A valve was then switched to allow this chilled oDCB to flow through the column at the same flow rate at -15°C for 10 min. The material eluted was designated as the soluble fraction of the copolymer. At this point, the heater was on and the solvent continued to flow through both the column and the infrared detector while the temperature was programmed upward at a controlled rate of 2°C/min to 140°C. The infrared detector continuously measured the concentration of the copolymer in the effluent from the column, and a continuous solubility distribution curve was obtained.

Described below are further embodiments of the inventions provided herein:

A. A polymer blend composition comprising a first ethylene-based copolymer and a second ethylene-based copolymer, wherein the first copolymer has an ethylene content from 44 to 52 wt%; the second copolymer has an ethylene content from 68 to 75 wt%; the first and second copolymers have a weight-average molecular weight (Mw) in the range of from 80,000 to 130,000; the ratio of the melt index of the first copolymer to

the melt index of the second copolymer is less than or equal to 3.0; and the composition comprises from 35 to 65 wt% of the first copolymer, based on the total weight of the first and second copolymers.

B. The polymer blend composition of paragraph A, wherein the first copolymer has an ethylene content from 45 to 51 wt% and the second copolymer has an ethylene content from 69 to 74 wt%.

C. The polymer blend composition of any of paragraphs A and B, wherein the first copolymer has an ethylene content from 46 to 50 wt%, and the second copolymer has an ethylene content from 70 to 73 wt%.

D. The polymer blend composition of any of paragraphs A through C, wherein the first and second copolymers each comprise one or more comonomers selected from the group consisting of $C_3$-$C_{20}$ alpha-olefins.

E. The polymer blend composition of any of paragraphs A through D, wherein the ethylene content of the second copolymer is at least 17 wt% greater than the ethylene content of the first copolymer.

F. The polymer blend composition of any of paragraphs A through E, wherein the ethylene content of the second copolymer is at least 21 wt% greater than the ethylene content of the first copolymer.

G. The polymer blend composition of any of paragraphs A through F, wherein the composition comprises from 38 to 62 wt% of the first copolymer, based on the total weight of the first and second copolymers.

H. The polymer blend composition of any of paragraphs A through G, wherein the composition comprises from 40 to 60 wt% of the first copolymer, based on the total weight of the first and second copolymers.

I. A polymer blend composition comprising a first ethylene-based copolymer and a second ethylene-based copolymer, wherein the first copolymer has a heat of fusion from 0 to 15 J/g; the second copolymer has a heat of fusion from 40 to 65 J/g; the first and second copolymers have a weight-average molecular weight (Mw) in the range of from 80,000 to 130,000; the ratio of the melt index of the first copolymer to the melt index of the second copolymer is less than or equal to 3.0; and the composition comprises from 35 to 65 wt% of the first copolymer, based on the total weight of the first and second copolymers.

J. The polymer blend composition of any of paragraphs A through I, wherein the first copolymer has a heat of fusion from 0 to 10 J/g and the second copolymer has a heat of fusion from 42 to 62 J/g.

K. The polymer blend composition of any of paragraphs A through J, wherein the first copolymer has a heat of fusion from 0 to 5 J/g and the second copolymer has a heat of fusion from 45 to 60 J/g.

L. The polymer blend composition of any of paragraphs A through K, wherein the first and second copolymers each comprise one or more comonomers selected from the group consisting of $C_3$-$C_{20}$ alpha-olefins.

M. The polymer blend composition of any of paragraphs A through L, wherein the ethylene content of the second copolymer is at least 17 wt% greater than the ethylene content of the first copolymer.

N. The polymer blend composition of claim 1 any of paragraphs A through M, wherein the ethylene content of the second copolymer is at least 21 wt% greater than the ethylene content of the first copolymer.

O. The polymer blend composition of any of paragraphs A through N, wherein the composition comprises from 38 to 62 wt% of the first copolymer, based on the total weight of the first and second copolymers.

P. The polymer blend composition of any of paragraphs A through O, wherein the composition comprises from 40 to 60 wt% of the first copolymer, based on the total weight of the first and second copolymers.

Q. A lubricating oil composition comprising a lubricating oil basestock, a first ethylene-based copolymer, and a second ethylene-based copolymer, wherein the first copolymer has an ethylene content from 44 to 52 wt%; the second copolymer has an ethylene content from 68 to 75 wt%; the first and second copolymers have a weight-average molecular weight (Mw) in the range of from 80,000 to 130,000; the ratio of the melt index of the first copolymer to the melt index of the second copolymer is less than or equal to 3.0; and the composition comprises from 35 to 65 wt% of the first copolymer, based on the total weight of the first and second copolymers.

R. The lubricating oil composition of paragraph Q, wherein the first copolymer has an ethylene content from 46 to 50 wt%, and the second copolymer has an ethylene content from 70 to 73 wt%.

S. The lubricating oil composition of any of paragraphs Q through R, wherein the first copolymer has a heat of fusion from 0 to 5 J/g and the second copolymer has a heat of fusion from 45 to 60 J/g.

T. The lubricating oil composition of any of paragraphs Q through S, wherein the first and second copolymers each comprise one or more comonomers selected from the group consisting of $C_3$-$C_{20}$ alpha-olefins.

U. The lubricating oil composition of any of paragraphs Q through T, wherein the ethylene content of the second copolymer is at least 21 wt% greater than the ethylene content of the first copolymer.

EXAMPLES

Unless indicated otherwise, the following examples are reference examples.

Preparation of the Ethylene-Based Copolymers

A variety of ethylene-based copolymers as described above were synthesized as follows. Ethylene and propylene were polymerized in solution in a continuous stirred tank reactor, using hexane as a solvent. Polymerization in the reactor was performed at a temperature of 110-115 °C, an overall pressure of 20 bar, and ethylene and propylene feed rates of 1.3 and 2.0 kg/hr, respectively. N,N-dimethylanilinium tetrakis(pentafluorophenyl)boron was used to activate di(p-triethylsilylphenyl)methenyl [(cyclopentadienyl)(2,7-di-tert-butylfluorophenyl)]hafnium dimethyl as the catalyst. During the polymerization process, hydrogen addition and temperature control were used to achieve the desired melt flow rate. The catalyst, activated externally to the reactor, was added as needed in amounts effective to maintain the target polymerization temperature.

The copolymer solution exiting the reactor was stopped from further polymerization by the addition of water and then devolatilized using conventional techniques such as, for example, flashing or liquid phase separation, first by removing the bulk of the hexane to provide a concentrated solution, then by stripping the remainder of the solvent in anhydrous conditions using a devolatilizer or a twin screw devolatilizing extruder so as to result in a molten polymer composition comprising less than 0.5 wt% solvent and other volatiles. The molten polymer was cooled until solid.

The compositions and other properties of the polymers thus prepared are set forth in Table 1

**Table 1**

| | A1* | A2* | A3* | A4* | B1** | B2** | B3** | B4** | B5** | B6** |
|---|---|---|---|---|---|---|---|---|---|---|
| Mw, g/mol | 92958 | 96720 | 100016 | 110133 | 74883 | 65983 | 73675 | 94434 | 77890 | 80194 |
| Mw/Mn | 2.25 | 2.20 | 2.22 | 2.03 | 2.28 | 2.23 | 2.08 | 2.23 | 2.24 | 2.18 |
| $C_2$, wt% | 48.98 | 45.65 | 46.00 | 49.94 | 70.41 | 72.57 | 72.44 | 76.42 | 66.82 | 79.28 |
| MFR, g/10 min (2.16 kg, 230 °C) | 5.53 | 5.97 | 5.61 | 2.90 | 6.40 | 8.32 | 6.61 | 1.49 | 4.99 | 2.64 |
| Tm, °C (1st melt) | -35.0 | n/a | n/a | -34.3 | 43.6 | 44.8 | 44.3 | 48.6 | 15.0 | 55.5 |
| Hf, J/g (1st melt) | 0.4 | n/a | n/a | 2.1 | 45.0 | 58.5 | 52.4 | 70.4 | 44.0 | 73.6 |
| Tc, °C (2nd cool) | -50.6 | n/a | n/a | -48.1 | 14.6 | 18.5 | 18.1 | 37.9 | 11.6 | 44.6 |
| Hc, J/g (2nd cool) | 2.4 | n/a | n/a | 3.4 | 46.4 | 52.1 | 43.8 | 61.4 | 36.2 | 59.6 |
| Tm, °C (2nd melt) | -36.4 | n/a | n/a | -35.0 | 19.2 | 30.2 | 29.9 | 48.5 | 11.0 | 53.8 |
| Hf, J/g (2nd melt) | 0.6 | n/a | n/a | 2.3 | 46.5 | 51.2 | 51.1 | 63.5 | 43.3 | 67.9 |
| Tg, °C | -58.6 | -57.5 | -57.6 | -58.3 | -48.1 | -45.0 | -37.1 | -40.3 | -48.1 | -40.3 |

*First copolymers according to the invention
**Second copolymers not according to the invention

Examples 1-115

Polymer blend compositions were prepared comprising a first ethylene-based copolymer and a second ethylene based copolymer, both of which were selected from the polymers listed in Table 1. The blends were made by melt blending in a Brabender mixer having an internal cavity of 250 ml at a temperature of from 120 to 150 °C for 3 to 5 minutes using low shear blades rotating at a speed of 15 to 200 rpm. The ethylene-based copolymers were protected during the mixing operation with a nitrogen blanket and by the addition of 1000 ppm of a 3:1 mixture of Irganox 1076 and Irgafos 168 (both available from BASF Corporation) before blending. The compositions of the resulting polymer blends are set forth in Table 2 below, and the amounts of each component are given in grams.

**Table 2**

| Example No. | A1 | A2 | A3 | A4 | B1 | B2 | B3 | B4 | B5 | B6 |
|---|---|---|---|---|---|---|---|---|---|---|
| 1 | | | 160 | | | | | 240 | | |
| 2 | | | 160 | | | 240 | | | | |
| 3 | | | 160 | | 240 | | | | | |
| 4 | | | 200 | | | | | 200 | | |
| 5 | | | 200 | | | 200 | | | | |
| 6 | | | 200 | | 200 | | | | | |
| 7 | | | 240 | | | | | 160 | | |
| 8 | | | 240 | | | 160 | | | | |
| 9 | | | 240 | | 160 | | | | | |
| 10 | | | 280 | | | | | 120 | | |
| 11 | | | 280 | | | 120 | | | | |
| 12 | | | 280 | | 120 | | | | | |
| 13 | | | 320 | | | | | 80 | | |
| 14 | | | 320 | | | 80 | | | | |
| 15 | | | 320 | | 80 | | | | | |
| 16 | | 160 | | | | | | 240 | | |
| 17 | | 160 | | | | 240 | | | | |
| 18 | | 160 | | | 240 | | | | | |
| 19 | | 200 | | | | | | 200 | | |
| 20 | | 200 | | | | 200 | | | | |
| 21 | | 200 | | | 200 | | | | | |
| 22 | | 240 | | | | | | 160 | | |
| 23 | | 240 | | | | 160 | | | | |
| 24 | | 240 | | | 160 | | | | | |
| 25 | | 280 | | | | | | 120 | | |
| 26 | | 280 | | | | 120 | | | | |
| 27 | | 280 | | | 120 | | | | | |
| 28 | | 320 | | | | | | 80 | | |
| 29 | | 320 | | | | 80 | | | | |
| 30 | | 320 | | | 80 | | | | | |
| 31 | 160 | | | | | | | 240 | | |
| 32 | 160 | | | | | 240 | | | | |
| 33 | 160 | | | | 240 | | | | | |
| 34 | 200 | | | | | | | 200 | | |
| 35 | 200 | | | | | 200 | | | | |
| 36 | 200 | | | | 200 | | | | | |
| 37 | 240 | | | | | | | 160 | | |
| 38 | 240 | | | | | 160 | | | | |

(continued)

| Example No. | A1 | A2 | A3 | A4 | B1 | B2 | B3 | B4 | B5 | B6 |
|---|---|---|---|---|---|---|---|---|---|---|
| 39 | 240 | | | | 160 | | | | | |
| 40 | 280 | | | | | | | 120 | | |
| 41 | 280 | | | | | 120 | | | | |
| 42 | 280 | | | | 120 | | | | | |
| 43 | 320 | | | | | | | 80 | | |
| 44 | 320 | | | | | 80 | | | | |
| 45 | 320 | | | | 80 | | | | | |
| 46 | | | | 160 | | | | 240 | | |
| 47 | | | | 160 | | | 240 | | | |
| 48 | | | | 160 | 240 | | | | | |
| 49 | | | | 200 | | | | 200 | | |
| 50 | | | | 200 | | | 200 | | | |
| 51 | | | | 200 | 200 | | | | | |
| 52 | | | | 240 | | | | 160 | | |
| 53 | | | | 240 | | | 160 | | | |
| 54 | | | | 240 | 160 | | | | | |
| 55 | | | | 280 | | | | 120 | | |
| 56 | | | | 280 | | | 120 | | | |
| 57 | | | | 280 | 120 | | | | | |
| 58 | | | | 320 | | | | 80 | | |
| 59 | | | | 320 | | | 80 | | | |
| 60 | | | | 320 | 80 | | | | | |
| 61 | | | 160 | | | | | | | 240 |
| 62 | | | 160 | | | | 240 | | | |
| 63 | | | 160 | | | | | | 240 | |
| 64 | | | 200 | | | | | | | 200 |
| 65 | | | 200 | | | | 200 | | | |
| 66 | | | 200 | | | | | | 200 | |
| 67 | | | 240 | | | | | | | 160 |
| 68 | | | 240 | | | | 160 | | | |
| 69 | | | 240 | | | | | | 160 | |
| 70 | | | 280 | | | | | | | 120 |
| 71 | | | 280 | | | | 120 | | | |
| 72 | | | 280 | | | | | | 120 | |
| 73 | | | 320 | | | | | | | 80 |
| 74 | | | 320 | | | | 80 | | | |
| 75 | | | 320 | | | | | | 80 | |
| 76 | | 160 | | | | | | | | 240 |

(continued)

| Example No. | A1 | A2 | A3 | A4 | B1 | B2 | B3 | B4 | B5 | B6 |
|---|---|---|---|---|---|---|---|---|---|---|
| 77 | | 160 | | | | | 240 | | | |
| 78 | | 160 | | | | | | | 240 | |
| 79 | | 200 | | | | | | | | 200 |
| 80 | | 200 | | | | | 200 | | | |
| 81 | | 200 | | | | | | | 200 | |
| 82 | | 240 | | | | | | | | 160 |
| 83 | | 240 | | | | | 160 | | | |
| 84 | | 240 | | | | | | | 160 | |
| 85 | | 280 | | | | | | | | 120 |
| 86 | | 280 | | | | | 120 | | | |
| 87 | | 280 | | | | | | | 120 | |
| 88 | | 320 | | | | | | | | 80 |
| 89 | | 320 | | | | | 80 | | | |
| 90 | | 320 | | | | | | | 80 | |
| 91 | 160 | | | | | | | | | 240 |
| 92 | 160 | | | | | | 240 | | | |
| 93 | 160 | | | | | | | | 240 | |
| 94 | 200 | | | | | | | | | 200 |
| 95 | 200 | | | | | | 200 | | | |
| 96 | 200 | | | | | | | | 200 | |
| 97 | 240 | | | | | | | | | 160 |
| 98 | 240 | | | | | | 160 | | | |
| 99 | 240 | | | | | | | | 160 | |
| 100 | 280 | | | | | | | | | 120 |
| 101 | 280 | | | | | | 120 | | | |
| 102 | 280 | | | | | | | | 120 | |
| 103 | 320 | | | | | | | | | 80 |
| 104 | 320 | | | | | | 80 | | | |
| 105 | 320 | | | | | | | | 80 | |
| 106 | | | | 160 | | | | | 240 | |
| 107 | | | | 160 | | | | | | 240 |
| 108 | | | | 200 | | | | | 200 | |
| 109 | | | | 200 | | | | | | 200 |
| 110 | | | | 240 | | | | | 160 | |
| 111 | | | | 240 | | | | | | 160 |
| 112 | | | | 280 | | | | | 120 | |
| 113 | | | | 280 | | | | | | 120 |
| 114 | | | | 320 | | | | | 80 | |

(continued)

| Example No. | A1 | A2 | A3 | A4 | B1 | B2 | B3 | B4 | B5 | B6 |
|---|---|---|---|---|---|---|---|---|---|---|
| 115 | | | | 320 | | | | | | 80 |

Molecular weight, thermal properties, and other characteristics of the polymer blends of Examples 1-115 are given in Table 3, below.

Table 3

| Ex. No. | MFR, g/10 min (2.16 kg, 230 °C) | FTIR | Mw, g/mol | Mw/ Mn | DSC: 1st Heat | | DSC: 2nd Heat | | | Tg, °C |
|---|---|---|---|---|---|---|---|---|---|---|
| | | | | | Tm, °C | Hf, J/g | Tm, °C | Hf, J/g | Tm, °C (onset) | |
| 1 | 2.52 | 64.05 | 95093 | 2.28 | | | | | | |
| 2 | 6.95 | 61.37 | 79671 | 2.34 | | | | | | |
| 3 | 5.71 | 58.47 | 83858 | 2.31 | | | | | | |
| 4 | 2.87 | 60.82 | 94642 | 2.26 | | | | | | |
| 5 | 6.86 | 57.59 | 81822 | 2.33 | | | | | | |
| 6 | 5.87 | 56.47 | 85255 | 2.28 | | | | | | |
| 7 | 3.34 | 58.09 | 94529 | 2.29 | | | | | | |
| 8 | 6.43 | 54.90 | 85279 | 2.29 | 43.3 | 20.2 | 29.9 | 23.7 | -43.8 | -27.1 |
| 9 | 5.75 | 54.27 | 87204 | 2.26 | 43.3 | 21.1 | 20.7 | 23.1 | -49.4 | -57 |
| 10 | 3.87 | 54.96 | 96128 | 2.21 | 46.4 | 15.2 | 48.4 | 12.5 | 0.03 | -55.8 |
| 11 | 6.38 | 53.29 | 89363 | 2.31 | 43.4 | 17.4 | 32.2 | 15.6 | -38.6 | -57.4 |
| 12 | 5.82 | 51.87 | 91674 | 2.26 | 43.4 | 10.4 | 32 | 10.2 | -33.3 | -57.1 |
| 13 | 4.48 | 51.71 | 98892 | 2.19 | 46.8 | 13.5 | 48.3 | 10.5 | -21.7 | -57.3 |
| 14 | 6.23 | 50.37 | 93073 | 2.22 | 43.6 | 9.2 | 32.7 | 6.8 | -23.2 | -57.5 |
| 15 | 5.72 | 49.71 | 94320 | 2.29 | n/a | n/a | 16.7 | 10.1 | -49.6 | -57.4 |
| 16 | 2.61 | 63.98 | 94969 | 2.27 | 47.4 | 35.8 | 48.8 | 33.6 | -20.6 | -57 |
| 17 | 7.23 | 61.15 | 78927 | 2.27 | 43.5 | 32.4 | 32.5 | 27.1 | -28.6 | -57 |
| 18 | 6.32 | 59.28 | 81765 | 2.31 | 22.3 | 49.7 | 22.4 | 22.6 | -35.3 | -57.2 |
| 19 | 2.99 | 60.78 | 95133 | 2.19 | 46.5 | 38.7 | 47.9 | 32.9 | -31.2 | -56.8 |
| 20 | 7.18 | 58.06 | 81095 | 2.26 | 43.5 | 40.7 | 33.6 | 18.8 | -14 | -56.9 |
| 21 | 6.06 | 56.84 | 84432 | 2.30 | 43.8 | 26.0 | 27.4 | 15.9 | -17.6 | -57.0 |
| 22 | 3.47 | 57.76 | 96930 | 2.18 | 47.1 | 27.7 | 47.7 | 26.5 | -28.8 | -56.8 |
| 23 | 7.05 | 56.22 | 93627 | 2.34 | 43.5 | 18.1 | 32.2 | 19.6 | -36.5 | -57.1 |
| 24 | 6.44 | 54.63 | 85046 | 2.31 | 44.1 | 19.9 | 24.8 | 12.7 | -26.7 | -56.9 |
| 25 | 4.14 | 55.21 | 96796 | 2.22 | 47.4 | 26.5 | 47.0 | 16.5 | -22.8 | -57.0 |
| 26 | 6.88 | 53.23 | 86536 | 2.31 | 44.0 | 15.8 | 31.1 | 15.5 | -39.3 | -57.0 |
| 27 | 6.33 | 52.21 | 88950 | 2.22 | 43.4 | 14.3 | 22.9 | 9.0 | -29.9 | -57.2 |
| 28 | 4.84 | 51.97 | 96810 | 2.22 | 47.6 | 12.9 | 48.5 | 10.6 | 4.4 | -57.2 |
| 29 | 6.71 | 50.94 | 89667 | 2.29 | 44.1 | 8.7 | 36.7 | 5.2 | 1.3 | -57.3 |
| 30 | 6.49 | 49.56 | 89962 | 2.23 | 43.7 | 6.6 | 21.4 | 5.9 | -38.9 | -57.0 |

(continued)

| Ex. No. | MFR, g/10 min (2.16 kg, 230 °C) | FTIR | Mw, g/mol | Mw/ Mn | DSC: 1st Heat | | DSC: 2nd Heat | | | Tg, °C |
|---|---|---|---|---|---|---|---|---|---|---|
| | | | | | Tm, °C | Hf, J/g | Tm, °C | Hf, J/g | Tm, °C (onset) | |
| 31 | 2.51 | 65.43 | 93794 | 2.18 | 46.9 | 31.5 | 48.9 | 28.8 | -13 | -57.8 |
| 32 | 7.30 | 63.36 | 76288 | 2.30 | 44.3 | 35.4 | 31.6 | 31.7 | -36.3 | -58.0 |
| 33 | 5.88 | 61.14 | 79103 | 2.26 | 18.8 | 36.3 | 19.3 | 27.1 | -39.9 | -57.7 |
| 34 | 2.91 | 62.77 | 119213 | 2.55 | 47 | 47.6 | 48.3 | 31.5 | -26.5 | -58.1 |
| 35 | 7.17 | 60.96 | 78222 | | 42.8 | 44.8 | 32.6 | 28.6 | -35.4 | -57.6 |
| 36 | 6.08 | 58.66 | 82102 | 2.24 | 43.4 | 28.9 | 21.3 | 22.6 | -40.9 | -57.9 |
| 37 | 3.49 | 60.28 | 95618 | 2.23 | 47.6 | 40.2 | 49.1 | 18.6 | -5.7 | -57.8 |
| 38 | 6.59 | 58.63 | 81354 | 2.29 | 43.6 | 23.1 | 31.4 | 20.9 | -41.1 | -58 |
| 39 | 5.62 | 57.10 | 82973 | 2.26 | 45.2 | 20.9 | 20.3 | 18.7 | -45.2 | -58 |
| 40 | 3.91 | 57.68 | 95467 | 2.20 | 46.9 | 21 | 48.5 | 13.9 | -3.6 | -58.3 |
| 41 | 6.19 | 55.99 | 82554 | 2.23 | 43.2 | 14.6 | 32.3 | 10.8 | -22.8 | -58.2 |
| 42 | 6.08 | 54.55 | 84467 | 2.26 | 43.3 | 13.0 | 22.1 | 11.5 | -40.6 | -58.1 |
| 43 | 4.55 | 54.58 | 94512 | 2.28 | 46.8 | 12.5 | 48.4 | 11.8 | -46.9 | -58.2 |
| 44 | 6.14 | 53.85 | 85698 | 2.27 | 44.5 | 13.3 | 33.0 | 8.0 | -41.5 | -58.0 |
| 45 | 6.11 | 52.53 | 90563 | 2.18 | 44.1 | 7.7 | 18.5 | 10.0 | -51.3 | -58.4 |
| 46 | 1.91 | 64.32 | 94846 | 2.31 | 46.2 | 38 | 47.7 | 45.2 | -40.4 | -57.7 |
| 47 | 4.46 | 59.91 | 85782 | 2.23 | | | 47.0 | 34.0 | -41.0 | |
| 48 | 4.32 | 58.93 | 84834 | 2.42 | | | | | | |
| 49 | 2.11 | 61.71 | 99282 | 2.23 | 46.0 | 38.2 | 47.0 | 34.0 | -41.0 | -57.9 |
| 50 | 4.27 | 58.71 | 89631 | 2.28 | | | | | | |
| 51 | 4.24 | 57.66 | 89587 | 2.24 | | | | | | |
| 52 | 2.34 | 59.13 | 99203 | 2.21 | 45.9 | 26.5 | 48.5 | 24.4 | -42.0 | -57.9 |
| 53 | | 56.20 | 93288 | 2.12 | | | | | | |
| 54 | | 55.70 | 90920 | 2.36 | | | | | | |
| 55 | | 56.57 | 100524 | 2.15 | 47.8 | 19.2 | 47.8 | 19.2 | -44.5 | -58.0 |
| 56 | | 54.29 | 95962 | 2.19 | | | | | | |
| 57 | 4.34 | 54.64 | 95549 | 2.27 | | | | | | |
| 58 | 2.54 | 54.10 | 102038 | 2.19 | 47.3 | 17.8 | 47.3 | 17.8 | -51.9 | -58.0 |
| 59 | 3.32 | 52.39 | 99714 | 2.24 | | | | | | |
| 60 | 3.28 | 52.48 | 97990 | 2.23 | | | | | | |
| 61 | 3.85 | 65.17 | 85288 | 2.07 | | | | | | |
| 62 | 5.86 | 59.99 | 78486 | 2.14 | | | | | | |
| 63 | 5.52 | 57.64 | 82261 | 2.14 | | | | | | |
| 64 | 4.06 | 62.08 | 88459 | 2.09 | | | | | | |
| 65 | 5.99 | 57.14 | 88095 | 2.05 | | | | | | |
| 66 | 5.50 | 55.09 | 80126 | 2.14 | | | | | | |

(continued)

| Ex. No. | MFR, g/10 min (2.16 kg, 230 °C) | FTIR | Mw, g/mol | Mw/ Mn | DSC: 1st Heat Tm, °C | DSC: 1st Heat Hf, J/g | DSC: 2nd Heat Tm, °C | DSC: 2nd Heat Hf, J/g | DSC: 2nd Heat Tm, °C (onset) | Tg, °C |
|---|---|---|---|---|---|---|---|---|---|---|
| 67 | 4.44 | 59.12 | 84846 | 2.16 | | | | | | |
| 68 | 6.00 | 54.14 | 87994 | 2.07 | | | | | | |
| 69 | 4.75 | 52.93 | 84369 | 2.15 | | | | | | |
| 70 | 4.68 | 55.09 | 86641 | 2.11 | | | | | | |
| 71 | 5.64 | 51.02 | 87145 | 2.13 | | | | | | |
| 72 | 5.64 | 50.87 | 92196 | 1.99 | | | | | | |
| 73 | 5.05 | 52.30 | 91295 | 2.11 | | | | | | |
| 74 | 5.86 | 49.93 | 88464 | 2.14 | | | | | | |
| 75 | 5.65 | 49.22 | 89994 | 2.02 | | | | | | |
| 76 | 3.92 | 64.18 | 83998 | 2.14 | | | | | | |
| 77 | 6.22 | 58.65 | 79938 | 2.09 | | | | | | |
| 78 | 5.49 | 56.56 | 82872 | 2.09 | | | | | | |
| 79 | 4.23 | 61.11 | 87868 | 2.17 | | | | | | |
| 80 | 5.98 | 57.13 | 83214 | 2.27 | 51.5 | 38.3 | 53.9 | 31.8 | -17.9 | -56.8 |
| 81 | 5.65 | 54.04 | 87118 | 2.17 | 45.2 | 26.7 | 28.8 | 20.6 | -31.5 | -57.1 |
| 82 | 4.60 | 58.48 | 89933 | 2.07 | 18.1 | 18 | 12.9 | 16.7 | -39.7 | -57.1 |
| 83 | 6.08 | 54.23 | 86110 | 2.16 | 50.6 | 31.2 | 53.9 | 26 | -17.2 | -57.1 |
| 84 | 5.67 | 52.03 | 88439 | 2.13 | 44.9 | 21 | 29.3 | 17.4 | -33.3 | -57.2 |
| 85 | 4.92 | 56.34 | | | 17.7 | 15.9 | 14.4 | 14.8 | -42.7 | -57.3 |
| 86 | 6.50 | 52.02 | 87648 | 2.12 | | | | | | |
| 87 | 5.87 | 50.95 | 88328 | 2.25 | 45.8 | 13.7 | 29.9 | 13 | -35.6 | -57.3 |
| 88 | 5.49 | 52.12 | | | | | | | | |
| 89 | 6.29 | 49.86 | | | | | | | | |
| 90 | 6.06 | 49.03 | | | | | | | | |

| Ex. No. | MFR, g/10 min (2.16 kg, 230 °C) | FTIR | Mw, g/mol | Mw/ Mn | DSC : 1st Heat | DSC : 2nd Heat | Tg, °C | Ex. No. | MFR, g/10 min (2.16 kg, 230 °C) | FTI R |
|---|---|---|---|---|---|---|---|---|---|---|
| 91 | 3.82 | 65.26 | | | | | | | | |
| 92 | 5.90 | 60.18 | | | | | | | | |
| 93 | 5.24 | 58.11 | | | | | | | | |
| 94 | 4.10 | 62.43 | 85077 | 2.27 | 50.4 | 41.1 | 53.9 | 33.6 | -23.8 | -58 |
| 95 | 5.98 | 57.88 | 80693 | 2.28 | 43.5 | 26.8 | 28.5 | 28.6 | -45.1 | -57.8 |
| 96 | 5.48 | 56.39 | 85583 | 2.21 | 17.5 | 26.2 | 13.4 | 21.1 | -45.4 | -58 |
| 97 | 4.33 | 59.72 | 86157 | 2.18 | 49.4 | 30.4 | 53.9 | 22.5 | -5 | -58.1 |
| 98 | 5.88 | 55.99 | 83169 | 2.24 | 43.6 | 18.2 | 27.9 | 21 | -43.1 | -58.1 |
| 99 | 5.66 | 53.97 | 84973 | 2.21 | 17.8 | 13.4 | 13.9 | 14.1 | -45.1 | -58.1 |
| 100 | 4.72 | 56.91 | 87276 | 2.17 | 49.3 | 21.4 | 52.8 | 20 | -34.6 | -58.3 |

(continued)

| Ex. No. | MFR, g/10 min (2.16 kg, 230 °C) | FTIR | Mw, g/mol | Mw/ Mn | DSC : 1st Heat | DSC : 2nd Heat | Tg, °C | Ex. No. | MFR, g/10 min (2.16 kg, 230 °C) | FTIR |
|---|---|---|---|---|---|---|---|---|---|---|
| 101 | 5.87 | 53.6 | 85803 | 2.17 | 44.4 | 13.8 | 28 | 16.1 | -47.1 | -58.3 |
| 102 | 5.65 | 52.59 | 88254 | 2.18 | 17.4 | 11.2 | 14.7 | 11.7 | -48.7 | -58.1 |
| 103 | 5.02 | 54.74 | | | | | | | | |
| 104 | 6.01 | 52.28 | | | | | | | | |
| 105 | 5.73 | 52.14 | | | | | | | | |
| 106 | 4.10 | 57.75 | 88340 | 2.18 | 19.6 | 22.9 | 9.8 | 19.8 | -44 | -57.6 |
| 107 | 2.91 | 65.82 | 89295 | 2.16 | 51 | 40.5 | 53.6 | 39.5 | -28.8 | -57.9 |
| 108 | 3.74 | 57.37 | | | 17 | 20.1 | 14.4 | 17.2 | -44 | -57.8 |
| 109 | 2.94 | 59.61 | | | 49.7 | 35.6 | 53.4 | 29.2 | 12.8 | -57.8 |
| 110 | 3.73 | 54.75 | | | 17.2 | 14.5 | 14.7 | 15.9 | -47.6 | -57.8 |
| 111 | 2.92 | 59.03 | | | 47.4 | 23.5 | 53.5 | 24.9 | -32.2 | -57.9 |
| 112 | 3.52 | 53.3 | | | 17.1 | 9.7 | 13.9 | 14.4 | -50.9 | -58.1 |
| 113 | 3.04 | 58.21 | | | 49.1 | 25 | 53 | 22.4 | -45.3 | -58.1 |
| 114 | 3.34 | 51.24 | 97683 | 2.19 | -33.5 | 8.7 | -34 | 8.6 | -52.5 | -58.2 |
| 115 | 3.01 | 54.53 | 100152 | 2.15 | 52 | 16.7 | 53 | 15.5 | -49.6 | -58.3 |

Examples 116-220

10W-50 lubricating oil compositions were prepared sequentially comprising the ethylene-based copolymer blends of Examples 1-115. Thus Example 116 comprises the formulation based on the Polymer blend of Example 1, while Example 117 comprises the formulation based on Example 2. In general in the data in Table 4 only the formulation data for Example (115+x) comprises the polymer blend in Example x. All of the lubricating oil formulations comprised the following: 52 g of a group 11 lubricating oil basestock having a viscosity of 4.5 cSt, 30.6 g of a group 11 lubricating oil basestock having a viscosity of 6.1 cSt, 1.4 g of the inventive polymer blend composition of one of Examples 1-115, 14 g of an additive package (Infineum D3426), 0.7 g of a magnesium sulfonate additive having a base number of 400 (Infineum 9340), 1.0 g of a calcium sulfonate additive having a base number of 300 (Infineum 9330), and 0.3 g of a pour point depressant (Infineum V387). Viscosity characteristics of the resulting compositions were tested as follows. Kinematic viscosity (KV) at 100°C was determined according to ASTM D445-5. Apparent viscosity was measured using a cold cranking simulator (CCS) at -20°C and -25°C according to ASTM D5293-4 and ASTM D5293-5, respectively. Yield stress and viscosity were determined using a mini rotary viscometer (MRV) at -25°C and -30°C according to ASTM D4684-4 (-25°C) and ASTM D4684-5 (-30°C). Results of these tests are reported in Table 4, below.

**Table 4**

| Ex. No. | KV, cSt (100 °C) | CCS, cP (-20 °C) | CCS, cP (-25 °C) | Yield Stress, MRV (-25 °C) | MRV Visc., cP (-25 °C) | Yield Stress, MRV (-30 °C) | MRV Visc., cP (-30 °C) | Pour Point, °C |
|---|---|---|---|---|---|---|---|---|
| 116 | 20.81 | 3350 | 6750 | <35 | 15700 | <35 | 53800 | -34 |
| 117 | 18.03 | 3340 | 6750 | <35 | 13400 | <35 | 36600 | -35 |
| 118 | 18.45 | 3330 | 6220 | <35 | 16500 | <35 | 52300 | -35 |
| 119 | 20.64 | 3420 | 6800 | <35 | 16600 | <35 | 45700 | -39 |
| 120 | 18.42 | 3380 | 6710 | <35 | 15400 | <35 | 43400 | -37 |
| 121 | 18.71 | 3390 | 6420 | <35 | 17300 | <35 | 48000 | -35 |

(continued)

| Ex. No. | KV, cSt (100 °C) | CCS, cP (-20 °C) | CCS, cP (-25 °C) | Yield Stress, MRV (-25 °C) | MRV Visc., cP (-25 °C) | Yield Stress, MRV (-30 °C) | MRV Visc., cP (-30 °C) | Pour Point, °C |
|---|---|---|---|---|---|---|---|---|
| 122 | 20.55 | 3470 | 6890 | <35 | 18200 | <35 | 52600 | -36 |
| 123 | 18.22 | 3460 | 6780 | <35 | 14600 | <35 | 40900 | -37 |
| 124 | 18.78 | 3370 | 6750 | <35 | 16800 | <35 | 47900 | -37 |
| 125 | 19.89 | 3470 | 6900 | <35 | 16900 | <35 | 51100 | -37 |
| 126 | 18.77 | 3470 | 6690 | <35 | 16700 | <35 | 47000 | -40 |
| 127 | 18.85 | 3470 | 6750 | <35 | 17200 | <35 | 43200 | -36 |
| 128 | 19.47 | 3540 | 7040 | <35 | 18600 | <35 | 53900 | -39 |
| 129 | 19.20 | 3540 | 7020 | <35 | 17800 | <35 | 49300 | -38 |
| 130 | 19.63 | 3740 | 7420 | <35 | 19100 | <35 | 53600 | -40 |
| 131 | 20.28 | 3290 | 6530 | <35 | 14800 | <35 | 45100 | -34 |
| 132 | 17.75 | 3300 | 6660 | <35 | 13600 | <35 | 38700 | -36 |
| 133 | 18.02 | 3280 | 6450 | <35 | 15300 | <35 | 44100 | -36 |
| 134 | 19.90 | 3360 | 6700 | <35 | 14600 | <35 | 43000 | -37 |
| 135 | 17.88 | 3340 | 6640 | <35 | 13800 | <35 | 38900 | -37 |
| 136 | 18.30 | 3330 | 6290 | <35 | 15500 | <35 | 44700 | -37 |
| 137 | 19.75 | 3400 | 6780 | <35 | 16200 | <35 | 46400 | -38 |
| 138 | 18.15 | 3390 | 6670 | <35 | 15000 | <35 | 40800 | -38 |
| 139 | 18.89 | 3410 | 6440 | <35 | 16700 | <35 | 43300 | -36 |
| 140 | 19.49 | 3470 | 6810 | <35 | 16700 | <35 | 44500 | -36 |
| 141 | 18.34 | 3430 | 6740 | <35 | 16000 | <35 | 41400 | -36 |
| 142 | 18.40 | 3430 | 6710 | <35 | 16200 | <35 | 42400 | -37 |
| 143 | 19.13 | 3540 | 6860 | <35 | 17400 | <35 | 44300 | -37 |
| 144 | 18.53 | 3490 | 6840 | <35 | 16800 | <35 | 43200 | -38 |
| 145 | 18.52 | 3490 | 6650 | <35 | 17200 | <35 | 41900 | -38 |
| 146 | 20.15 | 3260 | 6600 | <35 | 13600 | <35 | 39100 | -39 |
| 147 | 18.09 | 3310 | 6640 | <35 | 13000 | <35 | 34800 | -37 |
| 148 | 18.20 | 3260 | 6500 | <35 | 14900 | <35 | 38300 | -43 |
| 149 | 20.47 | 3340 | 6720 | <35 | 14400 | <35 | 40800 | -37 |
| 150 | 17.90 | 3310 | 6680 | <35 | 13600 | <35 | 34700 | -41 |
| 151 | 18.43 | 3310 | 6580 | <35 | 15300 | <35 | 39200 | -35 |
| 152 | 19.92 | 3360 | 6740 | <35 | 14800 | <35 | 39700 | -38 |
| 153 | 18.10 | 3370 | 6730 | <35 | 14700 | <35 | 35400 | -42 |
| 154 | 18.56 | 3360 | 6590 | <35 | 15800 | <35 | 39600 | -39 |
| 155 | 19.91 | 3430 | 6840 | <35 | 15700 | <35 | 41500 | -41 |
| 156 | 18.29 | 3420 | 6740 | <35 | 15500 | <35 | 40000 | -43 |
| 157 | 18.24 | 3410 | 6680 | <35 | 16000 | <35 | 41400 | -38 |

(continued)

| Ex. No. | KV, cSt (100 °C) | CCS, cP (-20 °C) | CCS, cP (-25 °C) | Yield Stress, MRV (-25 °C) | MRV Visc., cP (-25 °C) | Yield Stress, MRV (-30 °C) | MRV Visc., cP (-30 °C) | Pour Point, °C |
|---|---|---|---|---|---|---|---|---|
| 158 | 19.31 | 3520 | 6900 | <35 | 16600 | <35 | 44500 | -40 |
| 159 | 18.46 | 3480 | 6850 | <35 | 16300 | <35 | 43200 | -42 |
| 160 | 18.62 | 3500 | 6850 | <35 | 17000 | <35 | 44100 | -38 |
| 161 | 20.51 | 3090 | 6300 | <35 | 13400 | <35 | 35900 | -38 |
| 162 | 17.69 | 3100 | 6300 | <35 | 12300 | <35 | 31200 | -37 |
| 163 | 18.11 | 3090 | 6310 | <35 | 14700 | <35 | 40500 | -35 |
| 164 | 20.09 | 3140 | 6510 | <35 | 13800 | <35 | 37600 | -37 |
| 165 | 17.9 | 3120 | 6430 | <35 | 13700 | <35 | 35100 | -37 |
| 166 | 18.32 | 3160 | 6390 | <35 | 15400 | <35 | 41200 | -35 |
| 167 | 19.99 | 3200 | 6510 | <35 | 14800 | <35 | 40300 | -37 |
| 168 | 18.25 | 3190 | 6440 | <35 | 14400 | <35 | 37500 | -37 |
| 169 | 18.38 | 3210 | 6430 | <35 | 14700 | <35 | 39800 | -37 |
| 170 | 19.76 | 3270 | 6580 | <35 | 15000 | <35 | 39700 | -38 |
| 171 | 18.45 | 3240 | 6510 | <35 | 14900 | <35 | 37700 | -36 |
| 172 | 18.65 | 3280 | 6520 | <35 | 41600 | <35 | 41600 | -35 |
| 173 | 19.48 | 3350 | 6680 | <35 | 16000 | <35 | 42200 | -37 |
| 174 | 18.66 | 3310 | 6610 | <35 | 16200 | <35 | 41800 | -38 |
| 175 | 18.70 | 3320 | 6640 | <35 | 16600 | <35 | 43000 | -38 |
| 176 | 19.26 | 3340 | 6740 | <70 | 20800 | <105 | 78700 | -37 |
| 177 | 19.24 | 3360 | 6800 | <35 | 20800 | <70 | 75200 | -36 |
| 178 | 19.00 | 3380 | 6870 | <35 | 19500 | <35 | 63900 | -34 |
| 179 | 18.96 | 3420 | 6890 | <35 | 18300 | <35 | 53800 | -35 |
| 180 | 19.24 | 3500 | 6980 | <35 | 18600 | <35 | 52300 | -36 |
| 181 | 19.65 | 3230 | 6710 | <35 | 18700 | <70 | 73700 | -33 |
| 182 | 18.59 | 3230 | 6580 | <35 | 14500 | <35 | 47000 | -34 |
| 183 | 19.33 | 3340 | 6760 | <70 | 20900 | <105 | 75700 | -33 |
| 184 | 19.02 | 3310 | 6600 | <35 | 16600 | <70 | 49400 | -36 |
| 185 | 18.49 | 3300 | 6500 | <35 | 14300 | <35 | 38400 | -38 |
| 186 | 18.60 | 3410 | 6710 | <35 | 17100 | <70 | 49700 | -37 |
| 187 | 19.28 | 3410 | 6750 | <35 | 16900 | <35 | 48100 | -37 |
| 188 | 18.41 | 3360 | 6530 | <35 | 14600 | <35 | 37300 | -38 |
| 189 | 19.11 | 3480 | 6620 | <35 | 17600 | <35 | 48000 | -37 |
| 190 | 19.22 | 3400 | 6730 | <35 | 17300 | <35 | 48600 | -37 |
| 191 | 18.54 | 3440 | 6500 | <35 | 15900 | <35 | 41000 | -37 |
| 192 | 18.82 | 3530 | 6470 | <35 | 17200 | <35 | 45200 | -39 |
| 193 | 19.66 | 3570 | 7000 | <35 | 19400 | <70 | 58400 | -39 |

(continued)

| Ex. No. | KV, cSt (100 °C) | CCS, cP (-20 °C) | CCS, cP (-25 °C) | Yield Stress, MRV (-25 °C) | MRV Visc., cP (-25 °C) | Yield Stress, MRV (-30 °C) | MRV Visc., cP (-30 °C) | Pour Point, °C |
|---|---|---|---|---|---|---|---|---|
| 194 | 20.26 | 3340 | 6580 | <35 | 17200 | <35 | 53000 | -38 |
| 195 | 19.85 | 3490 | 6600 | <35 | 18700 | <35 | 51100 | -36 |
| 196 | 20.61 | 3430 | 6700 | <35 | 17500 | <35 | 49500 | -40 |
| 197 | 20.10 | 3530 | 6840 | <35 | 18600 | <35 | 49100 | -35 |
| 198 | 20.71 | 3480 | 6840 | <35 | 18200 | <35 | 47600 | -33 |
| 199 | 19.15 | 3290 | 6690 | <35 | 20100 | <105 | 75500 | -35 |
| 200 | 19.98 | 3220 | 6520 | <35 | 18700 | <70 | 75500 | -38 |
| 201 | 20.21 | 3510 | 7100 | <35 | 20000 | <35 | 49800 | -39 |
| 202 | 20.04 | 3460 | 6940 | <35 | 18200 | <35 | 53800 | -41 |
| 203 | 19.39 | 3480 | 7070 | <35 | 17600 | <35 | 50900 | -35 |
| 204 | 18.95 | 3430 | 6790 | <35 | 16600 | <35 | 41800 | -38 |
| 205 | 19.11 | 3500 | 7000 | <35 | 17400 | <35 | 46800 | -35 |
| 206 | 20.62 | 3280 | 6570 | <35 | 15600 | <35 | 54400 | -33 |
| 207 | 19.13 | 3310 | 6560 | <35 | 14800 | <35 | 44900 | -33 |
| 208 | 18.79 | 3350 | 6620 | <35 | 16100 | <35 | 45900 | -32 |
| 209 | 20.62 | 3390 | 6760 | <35 | 16900 | <35 | 52400 | -32 |
| 210 | 19.33 | 3300 | 6610 | <35 | 15700 | <35 | 44900 | -32 |
| 211 | 19.14 | 3380 | 6730 | <35 | 17000 | <35 | 46600 | -31 |
| 212 | 20.63 | 3450 | 6890 | <35 | 17600 | <35 | 52600 | -34 |
| 213 | 19.38 | 3440 | 6710 | <35 | 16700 | <35 | 46800 | -31 |
| 214 | 19.40 | 3460 | 6810 | <35 | 17300 | <35 | 47600 | -30 |
| 215 | 20.74 | 3220 | 6650 | <35 | 15600 | <35 | 59200 | -31 |
| 216 | 19.09 | 3270 | 6510 | <35 | 14100 | <35 | 50900 | -31 |
| 217 | 18.46 | 3290 | 6550 | <35 | 15000 | <35 | 50200 | -33 |
| 218 | 20.47 | 3520 | 6920 | <35 | 17800 | <35 | 52900 | -31 |
| 219 | 19.68 | 3440 | 6860 | <35 | 17500 | <35 | 48900 | -32 |
| 220 | 19.60 | 3500 | 6910 | <35 | 17900 | <35 | 48200 | -34 |

Examples 221-318

Lubricating oil compositions were prepared comprising the ethylene-based copolymer blends of Examples 1-115. All of the lubricating oil formulations comprised 1 wt% of the ethylene-based copolymer blend in a Group I basestock (Americas Core 150, available from Imperial Oil Ltd.) having the following lubricant properties: kinematic viscosity (KV) at 100°C (ASTM D445-5) of 5.189 cSt, KV at 40°C (ASTM D445-3) of 29 cSt (min), viscosity index (ASTM D2270) of 95 (min), flash point (ASTM D92) of 210°C (min), pour point (ASTM D97) of -15°C (max), and Noack volatility (ASTM D5800) of 20 wt% (max). For each formulation, shear stability properties (reflected by the Kurt Orbahn (KO) test at 30 and 90 cycles) and thickening efficiency (TE) were measured. Results of these tests are reported in Table 5, below.

**Table 5**

| Example No. | Blend No. from Table 2 | KO (30 cycles) | KO (90 cycles) | TE |
|---|---|---|---|---|
| 221 | 1 | 25.08 | 30.47 | 2.20 |
| 222 | 2 | 20.33 | 24.31 | 1.88 |
| 223 | 3 | 20.44 | 24.49 | 1.93 |
| 224 | 4 | 26.37 | 30.47 | 2.17 |
| 225 | 5 | 21.90 | 25.61 | 1.90 |
| 226 | 6 | 22.44 | 26.25 | 1.94 |
| 227 | 7 | 27.08 | 32.29 | 2.16 |
| 228 | 8 | 21.97 | 26.00 | 1.94 |
| 229 | 9 | 24.75 | 28.06 | 1.98 |
| 230 | 10 | 28.13 | 32.79 | 2.11 |
| 231 | 11 | 25.83 | 29.94 | 1.98 |
| 232 | 12 | 26.69 | 30.75 | 2.00 |
| 233 | 13 | 26.60 | 31.60 | 2.11 |
| 234 | 14 | 27.11 | 30.96 | 2.00 |
| 235 | 15 | 27.08 | 31.05 | 2.03 |
| 236 | 16 | 23.57 | 29.12 | 2.20 |
| 237 | 17 | 20.42 | 24.21 | 1.88 |
| 238 | 18 | 22.96 | 27.03 | 1.93 |
| 239 | 19 | 25.69 | 30.34 | 2.17 |
| 240 | 20 | 21.02 | 25.50 | 1.92 |
| 241 | 21 | 20.72 | 24.74 | 1.94 |
| 242 | 22 | 24.91 | 30.21 | 2.13 |
| 243 | 23 | 23.24 | 26.85 | 1.94 |
| 244 | 24 | 23.85 | 27.83 | 1.96 |
| 245 | 25 | 26.52 | 28.85 | 2.11 |
| 246 | 26 | 24.80 | 28.57 | 1.96 |
| 247 | 27 | 26.19 | 29.76 | 1.96 |
| 248 | 28 | 26.83 | 32.35 | 2.07 |
| 249 | 29 | 27.00 | 30.91 | 1.98 |
| 250 | 30 | 27.65 | 31.72 | 2.00 |
| 251 | 31 | 21.90 | 26.99 | 2.19 |
| 252 | 32 | 17.29 | 21.45 | 1.89 |
| 253 | 33 | 20.73 | 24.59 | 1.93 |
| 254 | 34 | 23.55 | 28.49 | 2.18 |
| 255 | 35 | 22.93 | 26.65 | 1.90 |
| 256 | 36 | 23.22 | 27.55 | 1.97 |
| 257 | 37 | 25.52 | 30.38 | 2.16 |
| 258 | 38 | 22.11 | 24.90 | 1.95 |

(continued)

| Example No. | Blend No. from Table 2 | KO (30 cycles) | KO (90 cycles) | TE |
|---|---|---|---|---|
| 259 | 39 | 24.26 | 28.00 | 1.97 |
| 260 | 40 | 26.79 | 30.12 | 2.14 |
| 261 | 41 | 24.26 | 28.00 | 1.97 |
| 262 | 42 | 24.50 | 28.68 | 1.95 |
| 263 | 43 | 27.67 | 32.39 | 2.14 |
| 264 | 44 | 22.35 | 25.88 | 1.98 |
| 265 | 45 | 24.71 | 28.67 | 2.03 |
| 266 | 46 | 24.67 | 30.03 | 2.26 |
| 267 | 47 | 18.80 | 23.00 | 1.95 |
| 268 | 48 | 20.35 | 24.30 | 1.96 |
| 269 | 49 | 24.87 | 30.25 | 2.20 |
| 270 | 50 | 19.32 | 23.50 | 1.95 |
| 271 | 51 | 20.94 | 25.09 | 1.96 |
| 272 | 52 | 25.08 | 29.69 | 2.18 |
| 273 | 53 | 21.49 | 25.83 | 1.97 |
| 274 | 54 | 23.22 | 27.25 | 2.01 |
| 275 | 55 | 25.73 | 30.39 | 2.16 |
| 276 | 56 | 22.78 | 26.64 | 2.00 |
| 277 | 57 | 23.41 | 27.44 | 2.01 |
| 278 | 58 | 27.32 | 31.69 | 2.14 |
| 279 | 59 | 25.23 | 29.44 | 2.01 |
| 280 | 60 | 25.97 | 30.05 | 2.06 |
| 281 | 63 | 18.83 | 22.22 | 2.03 |
| 282 | 66 | 23.82 | 27.25 | 2.10 |
| 283 | 69 | 23.71 | 28.85 | 2.07 |
| 284 | 72 | 26.37 | 30.95 | 2.08 |
| 285 | 75 | 25.92 | 30.92 | 2.06 |
| 286 | 79 | 22.45 | 27.27 | 2.12 |
| 287 | 80 | 22.07 | 25.97 | 1.98 |
| 288 | 81 | 23.69 | 27.98 | 2.05 |
| 289 | 82 | 22.46 | 27.35 | 2.09 |
| 290 | 83 | 23.63 | 27.53 | 1.98 |
| 291 | 84 | 24.52 | 28.73 | 2.01 |
| 292 | 86 | 23.91 | 28.43 | 2.03 |
| 293 | 87 | 25.55 | 30.14 | 2.06 |
| 294 | 91 | 19.60 | 24.64 | 2.10 |
| 295 | 92 | 18.85 | 23.41 | 1.95 |
| 296 | 93 | 22.71 | 27.00 | 2.05 |

(continued)

| Example No. | Blend No. from Table 2 | KO (30 cycles) | KO (90 cycles) | TE |
|---|---|---|---|---|
| 297 | 94 | 20.96 | 25.62 | 2.11 |
| 298 | 95 | 21.26 | 25.47 | 2.01 |
| 299 | 96 | 22.79 | 26.65 | 2.07 |
| 300 | 97 | 21.47 | 23.71 | 2.07 |
| 301 | 98 | 22.63 | 27.27 | 2.00 |
| 302 | 99 | 21.57 | 26.07 | 2.04 |
| 303 | 100 | 23.96 | 28.64 | 2.10 |
| 304 | 101 | 23.81 | 27.59 | 2.03 |
| 305 | 102 | 25.27 | 29.18 | 2.05 |
| 306 | 103 | 25.32 | 29.38 | 2.05 |
| 307 | 104 | 24.80 | 29.77 | 2.01 |
| 308 | 105 | 26.12 | 30.07 | 2.04 |
| 309 | 106 | 23.92 | 28.95 | 2.10 |
| 310 | 107 | 23.68 | 28.59 | 2.19 |
| 311 | 108 | 25.74 | 29.94 | 2.14 |
| 312 | 109 | 24.23 | 28.64 | 2.19 |
| 313 | 110 | 26.40 | 30.80 | 2.13 |
| 314 | 111 | 25.50 | 30.83 | 2.22 |
| 315 | 112 | 28.30 | 32.93 | 2.17 |
| 316 | 113 | 27.51 | 32.12 | 2.24 |
| 317 | 114 | 28.49 | 32.98 | 2.16 |
| 318 | 115 | 27.92 | 32.27 | 2.21 |

Further ethylene-based copolymers were prepared in a manner similar to that described above. Properties of the copolymers are set forth in Table 6, below.

**Table 6**

| Copolymer No. | Mw, g/mol | Mw/Mn | $C_2$, wt% | MFR (2.16 kg, 230 °C) | MFR (21.6 kg, 230 °C) | Tm, °C (1st melt) | Hf, J/g (1st melt) | Tc, °C (2nd cool) | Hc, J/g (2nd cool) | Tm, °C (2nd melt) | Hf, J/g (2nd melt) |
|---|---|---|---|---|---|---|---|---|---|---|---|
| E1 | 82000 | 1.84 | 63.6 | 9.2 | 175 | -1.3 | 26.8 | -2.3 | 30.9 | -3.2 | 41.5 |
| E2 | 71000 | 1.85 | 70.5 | 13.0 | 238 | 45.5 | 35.9 | 13.8 | 43.7 | 28.3 | 38.4 |
| E3 | 97000 | 1.95 | 59.0 | 15.0 | 280 | -17.7 | 22.9 | -17.5 | 29.6 | -17.8 | 29.7 |
| E4** | 80000 | 1.93 | 69.2 | 12.0 | 239 | 43.5 | 38.4 | 12.4 | 45.1 | 24.5 | 39.9 |
| E5 | 89000 | 2.07 | 62.3 | 12.0 | 259 | -6.0 | 25.7 | -6.3 | 37.5 | -6.8 | 32.7 |
| E6** | 99000 | 2.00 | 74.2 | 15.0 | 277 | 47.9 | 45.3 | 17.7 | 51.8 | 35.6 | 45.7 |
| E7 | 103000 | 2.07 | 57.3 | 8.0 | 184 | -18.6 | 19.4 | -18.8 | 21.9 | -19.8 | 20.8 |
| E8 | 110000 | 2.04 | 60.7 | 7.9 | 159 | -13.4 | 24.1 | -13.5 | 25.0 | -14.3 | 24.4 |
| E9 | 109000 | 1.91 | 53.4 | 4.9 | 155 | -28.5 | 8.6 | -39.2 | 11.6 | -29.6 | 8.3 |
| E10* | 98000 | 1.85 | 49.2 | 12.0 | 377 | -33.8 | 2.4 | -51.3 | 11.4 | -36.0 | 2.9 |
| E11* | 108000 | 1.98 | 47.2 | 12.0 | 288 | 59.3 | 1.7 | -54.8 | 11.7 | 78.6 | 4.1 |
| E12 | 82000 | 1.84 | 63.6 | 9.2 | 175 | -1.3 | 26.8 | -2.3 | 30.9 | -3.2 | 41.5 |

*First copolymers according to the invention
**Second copolymers according to the invention

Examples 319-328

Blends of the copolymers listed in Table 6 were formed and evaluated using dynamic mechanical thermal analysis (DMTA). In the DMTA procedure, samples having approximate dimensions of 23 x 6.42 mm were die-cut from compression molded plaques (molded at 180°C for 15 min) having a thickness of 0.7 mm. The samples were conditioned under ambient conditions for 24 hours before DMTA measurements were taken using a DMTA V instrument in tension mode (0.05% strain, 1 Hz frequency, 2°C/min heating rate, temperature range of -100 to 150°C). Composition and DMTA properties of the blends are reported in Table 7, below. Multiple DMTA Tg results indicate multiple melting peaks.

**Table 7**

| Example No. | Composition, wt% | $\triangle C_2$, wt% | DMTA Tg, °C |
|---|---|---|---|
| 319 | 80% E1 + 20% E2 | 6.9 | -44 |
| 320 | 30% E4 + 70% E5 | 6.9 | -46 |
| 321 | 30% E2 + 70% E5 | 8.2 | -46 |
| 322 | 70% E3 + 30% E2 | 11.5 | -48 |
| 323 | 70% E5 + 30% E6 | 11.9 | -46 |
| 324 | 20% E4 + 80% E10 | 15.8 | -52 |
| 325 | 50% E4 + 50% E12 | 22.0 | -54, -42 |
| 326 | 50% E2 + 50% E12 | 23.3 | -54, -40 |
| 327* | 50% E6 + 50% E11 | 25.0 | -54, -36 |
| 328 | 50% E6 + 50% E12 | 27.0 | -56, -34 |
| *According to the invention | | | |

Examples 329-338

The polymer blends of examples 319-328 were then mixed with Americas Core 150 (AC150) basestock according to the following procedure. A 50 g Brabender mixer was heated to 150°C, and the run was started at 30 rpm with the temperature kept stable. One of the polymer blends of Examples 319-328 was added to the mixer followed by 0.2 wt% Irganox 1076 and 0.07 wt% Irgafos 168 while maintaining the torque below 1500. The mixer speed was increased to 65 rpm for 1 minute, then reduced to 35 rpm. 50 phr of AC150 basestock was then added slowly using a syringe (to prevent pooling in the molten polymer) and the compositions were mixed for 5 minutes to fully incorporate the AC150. The resulting compositions were then tested using the DMTA procedure set forth above. Composition and DMTA properties of the blends are reported in Table 8, below. Multiple DMTA Tg results indicate multiple melting peaks.

**Table 8**

| Example No. | $C_2$, wt% | Composition, wt% | $\triangle C_2$, wt% | DMTA Tg, °C |
|---|---|---|---|---|
| 329 | 65.0 | 80% E1 + 20% E2 | 6.9 | -56 |
| 330 | 64.2 | 30% E4 + 70% E5 | 6.9 | -54 |
| 331 | 64.4 | 30% E2 + 70% E5 | 8.2 | -56 |
| 332 | 63.2 | 70% E3 + 30% E2 | 11.5 | -58 |
| 333 | 65.5 | 70% E5 + 30% E6 | 11.9 | -56 |
| 334 | 56.6 | 20% E4 + 80% E10 | 15.8 | -56 |
| 335 | 58.7 | 50% E4 + 50% E12 | 22.0 | -62, -46 |
| 336 | 59.4 | 50% E2 + 50% E12 | 23.3 | -60, -44 |
| 337* | 63.8 | 50% E6 + 50% E11 | 25.0 | -62, -42 |

(continued)

| Example No. | C$_2$, wt% | Composition, wt% | △C$_2$, wt% | DMTA Tg, °C |
|---|---|---|---|---|
| 338 | 62.7 | 50% E6 + 50% E12 | 27.0 | -62, -40 |
| *According to the invention | | | | |

Certain embodiments and features have been described using a set of numerical upper limits and a set of numerical lower limits. It should be appreciated that ranges from any lower limit to any upper limit are contemplated unless otherwise indicated..

(deleted)

(deleted)

## Claims

1. A polymer blend composition comprising a first ethylene-based copolymer and a second ethylene-based copolymer, wherein:

   (a) the first copolymer has an ethylene content from 44 to 52 wt%;
   (b) the second copolymer has an ethylene content from 68 to 75 wt%;
   (c) the first and second copolymers have a weight-average molecular weight (Mw) in the range of from 80,000 to 130,000;
   (d) the ratio of the melt index of the first copolymer to the melt index of the second copolymer is less than or equal to 3.0; and
   (e) the composition comprises from 35 to 65 wt% of the first copolymer, based on the total weight of the first and second copolymers.

2. The polymer blend composition of claim 1, wherein the first copolymer has an ethylene content from 45 to 51 wt% and the second copolymer has an ethylene content from 69 to 74 wt%.

3. The polymer blend composition of claims 1 or 2, wherein the first copolymer has an ethylene content from 46 to 50 wt%, and the second copolymer has an ethylene content from 70 to 73 wt%.

4. A polymer blend composition comprising a first ethylene-based copolymer and a second ethylene-based copolymer, wherein:

   (a) the first copolymer has a heat of fusion from 0 to 15 J/g;
   (b) the second copolymer has a heat of fusion from 40 to 65 J/g;
   (c) the first and second copolymers have a weight-average molecular weight (Mw) in the range of from 80,000 to 130,000;
   (d) the ratio of the melt index of the first copolymer to the melt index of the second copolymer is less than or equal to 3.0; and
   (e) the composition comprises from 35 to 65 wt% of the first copolymer, based on the total weight of the first and second copolymers.

5. The polymer blend composition of claim 4, wherein the first copolymer has a heat of fusion from 0 to 10 J/g and the second copolymer has a heat of fusion from 42 to 62 J/g.

6. The polymer blend composition of claims 4 or 5, wherein the first copolymer has a heat of fusion from 0 to 5 J/g and the second copolymer has a heat of fusion from 45 to 60 J/g.

7. The polymer blend composition of any of claims 1-6, wherein the first and second copolymers each comprise one or more comonomers selected from the group consisting of C$_3$-C$_{20}$ alpha-olefins.

8. The polymer blend composition of any of claims 1-7, wherein the ethylene content of the second copolymer is at least 17 wt% greater than the ethylene content of the first copolymer.

9. The polymer blend composition of any of claims 1-8, wherein the ethylene content of the second copolymer is at least 21 wt% greater than the ethylene content of the first copolymer.

10. The polymer blend composition of any of claims 1-9, wherein the composition comprises from 38 to 62 wt% of the first copolymer, based on the total weight of the first and second copolymers.

11. The polymer blend composition of any of claims 1-10, wherein the composition comprises from 40 to 60 wt% of the first copolymer, based on the total weight of the first and second copolymers.

12. A lubricating oil composition comprising a lubricating oil basestock, a first ethylene-based copolymer, and a second ethylene-based copolymer, wherein:

(a) the first copolymer has an ethylene content from 44 to 52 wt%;
(b) the second copolymer has an ethylene content from 68 to 75 wt%;
(c) the first and second copolymers have a weight-average molecular weight (Mw) in the range of from 80,000 to 130,000;
(d) the ratio of the melt index of the first copolymer to the melt index of the second copolymer is less than or equal to 3.0; and
(e) the composition comprises from 35 to 65 wt% of the first copolymer, based on the total weight of the first and second copolymers.

13. The lubricating oil composition of claim 12, wherein the first copolymer has an ethylene content from 46 to 50 wt%, and the second copolymer has an ethylene content from 70 to 73 wt%.

14. The lubricating oil composition of any of claims 12-13, wherein the ethylene content of the second copolymer is at least 21 wt% greater than the ethylene content of the first copolymer.


**Patentansprüche**

1. Polymergemisch-Zusammensetzung, die ein erstes auf Ethylen basierendes Copolymer und ein zweites auf Ethylen basierendes Copolymer umfasst, in der

(a) das erste Copolymer einen Ethylengehalt von 44 bis 52 Gew.-% aufweist,
(b) das zweite Copolymer einen Ethylengehalt von 68 bis 75 Gew.-% aufweist,
(c) die ersten und zweiten Copolymere ein durchschnittliches gewichtsmäßiges Molekulargewicht (Mw) im Bereich von 80 000 bis 130 000 aufweisen,
(d) das Verhältnis des Schmelzindexes der ersten Copolymers zu dem Schmelzindex des zweiten Copolymers kleiner als oder gleich 3,0 ist, und
(e) die Zusammensetzung 35 bis 65 Gew.-% des ersten Copolymers umfasst, bezogen auf das Gesamtgewicht der ersten und zweiten Copolymere.

2. Polymergemisch-Zusammensetzung nach Anspruch 1, bei der das erste Copolymer einen Ethylengehalt von 45 bis 51 Gew.-% aufweist und das zweite Copolymer einen Ethylen-gehalt von 69 bis 74 Gew.-% aufweist.

3. Polymergemisch-Zusammensetzung nach Anspruch 1 oder 2, bei der das erste Copolymer einen Ethylengehalt von 46 bis 50 Gew.-% aufweist und das zweite Copolymer einen Ethylen-gehalt von 70 bis 73 Gew.-% aufweist.

4. Polymergemisch-Zusammensetzung, die ein erstes auf Ethylen basierendes Copolymer und ein zweites auf Ethylen basierendes Copolymer umfasst, in der

(a) das erste Copolymer eine Schmelzwärme von 0 bis 15 J/g aufweist,
(b) das zweite Copolymer eine Schmelzwärme von 40 bis 65 J/g aufweist,
(c) die ersten und zweiten Copolymere ein durchschnittliches gewichtsmäßiges Molekulargewicht (Mw) im Bereich von 80 000 bis 130 000 aufweisen,
(f) das Verhältnis des Schmelzindexes der ersten Copolymers zu dem Schmelzindex des zweiten Copolymers kleiner als oder gleich 3,0 ist, und
(g) die Zusammensetzung 35 bis 65 Gew.-% des ersten Copolymers umfasst, bezogen auf das Gesamtgewicht der ersten und zweiten Copolymere.

5. Polymergemisch-Zusammensetzung nach Anspruch 4, bei der das erste Copolymer eine Schmelzwärme von 0 bis 10 J/g aufweist und das zweite Copolymer eine Schmelzwärme von 42 bis 62 J/g aufweist.

6. Polymergemisch-Zusammensetzung nach Anspruch 4 oder 5, bei der das erste Copolymer eine Schmelzwärme von 0 bis 5 J/g aufweist und das zweite Copolymer eine Schmelzwärme von 45 bis 60 J/g aufweist.

7. Polymergemisch-Zusammensetzung nach einem der Ansprüche 1 bis 6, bei der die ersten und zweiten Copolymere jeweils ein oder mehrere Comonomere ausgewählt aus der Gruppe bestehend aus $C_3$-$C_{20}$-$\alpha$-Olefinen umfassen.

8. Polymergemisch-Zusammensetzung nach einem der Ansprüche 1 bis 7, bei der der Ethylengehalt des zweiten Copolymer mindestens 17 Gew.-% größer ist als der Ethylengehalt des ersten Copolymers.

9. Polymergemisch-Zusammensetzung nach einem der Ansprüche 1 bis 8, bei der der Ethylengehalt des zweiten Copolymer mindestens 21 Gew.-% größer ist als der Ethylengehalt des ersten Copolymers.

10. Polymergemisch-Zusammensetzung nach einem der Ansprüche 1 bis 9, bei der die Zusammensetzung 38 bis 62 Gew.-% des ersten Copolymers umfasst, bezogen auf das Gesamtgewicht der ersten und zweiten Copolymere.

11. Polymergemisch-Zusammensetzung nach einem der Ansprüche 1 bis 9, bei der die Zusammensetzung 40 bis 60 Gew.-% des ersten Copolymers umfasst, bezogen auf das Gesamtgewicht der ersten und zweiten Copolymere.

12. Schmierölzusammensetzung, die ein Schmierölbasismaterial, ein erstes auf Ethylen basierendes Copolymer und ein zweites auf Ethylen basierendes Copolymer umfasst, in der

(a) das erste Copolymer einen Ethylengehalt von 44 bis 52 Gew.-% aufweist,
(b) das zweite Copolymer einen Ethylengehalt von 68 bis 75 Gew.-% aufweist,
(c) die ersten und zweiten Copolymere ein durchschnittliches gewichtsmäßiges Molekulargewicht (Mw) im Bereich von 80 000 bis 130 000 aufweisen,
(d) das Verhältnis des Schmelzindexes der ersten Copolymers zu dem Schmelzindex des zweiten Copolymers kleiner als oder gleich 3,0 ist, und
(e) die Zusammensetzung 35 bis 65 Gew.-% des ersten Copolymers umfasst, bezogen auf das Gesamtgewicht der ersten und zweiten Copolymere.

13. Schmierölzusammensetzung nach Anspruch 12, bei der das erste Copolymer einen Ethylengehalt von 46 bis 50 Gew.-% aufweist und das zweite Copolymer einen Ethylengehalt von 70 bis 73 Gew.-% aufweist.

14. Schmierölzusammensetzung nach einem der Ansprüche 12 - 13, bei der der Ethylengehalt des zweiten Copolymer mindestens 21 Gew.-% größer ist als der Ethylengehalt des ersten Copolymers.


**Revendications**

1. Composition de mélange de polymères comprenant un premier copolymère à base d'éthylène et un second copolymère à base d'éthylène, dans laquelle :

(a) le premier copolymère a une teneur en éthylène de 44 à 52 % en poids ;
(b) le second copolymère a une teneur en éthylène de 68 à 75 % en poids ;
(c) les premier et second copolymères ont une masse moléculaire moyenne en poids (Mw) dans la plage de 80 000 à 130 000 ;
(d) le rapport de l'indice de fluidité à chaud du premier copolymère à l'indice de fluidité à chaud du second copolymère est inférieur ou égal à 3,0 ; et
(e) la composition comprend de 35 à 65 % en poids du premier copolymère, par rapport au poids total des premier et second copolymères.

2. Composition de mélange de polymères selon la revendication 1, dans laquelle le premier copolymère a une teneur en éthylène de 45 à 51 % en poids et le second copolymère a une teneur en éthylène de 69 à 74 % en poids.

**3.** Composition de mélange de polymères selon les revendications 1 ou 2, dans laquelle le premier copolymère a une teneur en éthylène de 46 à 50 % en poids et le second copolymère a une teneur en éthylène de 70 à 73 % en poids.

**4.** Composition de mélange de polymères comprenant un premier copolymère à base d'éthylène et un second copolymère à base d'éthylène, dans laquelle :

(a) le premier copolymère a une chaleur de fusion de 0 à 15 J/g ;
(b) le second copolymère a une chaleur de fusion de 40 à 65 J/g ;
(c) les premier et second copolymères ont une masse moléculaire moyenne en poids (Mw) dans la plage de 80 000 à 130 000 ;
(d) le rapport de l'indice de fluidité à chaud du premier copolymère à l'indice de fluidité à chaud du second copolymère est inférieur ou égal à 3,0 ; et
(e) la composition comprend de 35 à 65 % en poids du premier copolymère, par rapport au poids total des premier et second copolymères.

**5.** Composition de mélange de polymères selon la revendication 4, dans laquelle le premier copolymère a une chaleur de fusion de 0 à 10 J/g et le second copolymère a une chaleur de fusion de 42 à 62 J/g.

**6.** Composition de mélange de polymères selon les revendications 4 ou 5, dans laquelle le premier copolymère a une chaleur de fusion de 0 à 5 J/g et le second copolymère a une chaleur de fusion de 45 à 60 J/g.

**7.** Composition de mélange de polymères selon l'une quelconque des revendications 1-6, dans laquelle les premier et second copolymères comprennent chacun un ou plusieurs comonomères choisis dans le groupe constitué par les alpha-oléfines en $C_3$-$C_{20}$.

**8.** Composition de mélange de polymères selon l'une quelconque des revendications 1-7, dans laquelle la teneur en éthylène du second copolymère est au moins 17 % en poids plus élevée que la teneur en éthylène du premier copolymère.

**9.** Composition de mélange de polymères selon l'une quelconque des revendications 1-8, dans laquelle la teneur en éthylène du second copolymère est au moins 21 % en poids plus élevée que la teneur en éthylène du premier copolymère.

**10.** Composition de mélange de polymères selon l'une quelconque des revendications 1-9, la composition comprenant de 38 à 62 % en poids du premier copolymère, par rapport au poids total des premier et second copolymères.

**11.** Composition de mélange de polymères selon l'une quelconque des revendications 1-10, la composition comprenant de 40 à 60 % en poids du premier copolymère, par rapport au poids total des premier et second copolymères.

**12.** Composition d'huile lubrifiante comprenant une huile de base lubrifiante, un premier copolymère à base d'éthylène et un second copolymère à base d'éthylène, dans laquelle :

(a) le premier copolymère a une teneur en éthylène de 44 à 52 % en poids ;
(b) le second copolymère a une teneur en éthylène de 68 à 75 % en poids ;
(c) les premier et second copolymères ont une masse moléculaire moyenne en poids (Mw) dans la plage de 80 000 à 130 000 ;
(d) le rapport de l'indice de fluidité à chaud du premier copolymère à l'indice de fluidité à chaud du second copolymère est inférieur ou égal à 3,0 ; et
(e) la composition comprend de 35 à 65 % en poids du premier copolymère, par rapport au poids total des premier et second copolymères.

**13.** Composition d'huile lubrifiante selon la revendication 12, dans laquelle le premier copolymère a une teneur en éthylène de 46 à 50 % en poids et le second copolymère a une teneur en éthylène de 70 à 73 % en poids.

**14.** Composition d'huile lubrifiante selon l'une quelconque des revendications 12-13, dans laquelle la teneur en éthylène du second copolymère est au moins 21 % en poids plus élevée que la teneur en éthylène du premier copolymère.

**EP 2 598 569 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7402235 B
- US 5391617 A
- EP 0638611 A
- WO 2010126721 A
- US 5382630 A
- US 5008204 A
- US 5324800 A
- US 5198401 A
- US 5278119 A
- US 5387568 A
- US 5120867 A
- US 5017714 A
- US 4871705 A
- US 4542199 A
- US 4752597 A
- US 5132262 A
- US 5391629 A
- US 5243001 A
- US 5278264 A
- US 5296434 A
- US 5304614 A
- EP 0277003 A
- EP 0277004 A
- WO 9200333 A
- EP 0426637 A
- EP 0573403 A
- EP 0427697 A
- EP 0520732 A
- EP 0495375 A
- EP 0500944 A
- EP 0570982 A1
- EP 0612768 A1
- US 6319998 B
- US 60243192 B
- US 6881800 B
- US 61173528 B
- US 5068047 A
- US 3933659 A
- US 4176074 A
- US 4105571 A
- US 3779928 A
- US 3778375 A
- US 3852205 A
- US 3879306 A
- US 3932290 A
- US 4028258 A
- US 4344853 A
- US 4464493 A

**Non-patent literature cited in the description**

- **L. WILD et al.** *J. Poly. Sci., Poly. Phys. Ed.,* 1982, vol. 20, 441
- **T. SUN ; P. BRANT ; R. R. CHANCE ; W. W. GRAESSLEY.** *MACROMOLECULES,* 2001, vol. 34 (19), 6812-6820
- **M.B. HUGLIN.** LIGHT SCATTERING FROM POLYMER SOLUTIONS. Academic Press, 1971
- **T. SUN ; R. R. CHANCE ; W. W. GRAESSLEY ; D. J. LOHSE.** A Study of the Separation Principle in Size Exclusion Chromatography. *MACROMOLECULES,* 2004, vol. 37 (11), 4304-4312
- **T. SUN, R. R. CHANCE ; W. W. GRAESSLEY.** Effect of Short Chain Branching on the Coil Dimensions of Polyolefins in Dilute Solution. *MACROMOLECULES,* 2001, vol. 34 (19), 6812-6820
- **H. N. CHENG ; MASAHIRO KAKUGO.** Carbon-13 NMR analysis of compositional heterogeneity in ethylene-propylene copolymers. *MACROMOLECULES,* 1991, vol. 24 (8), 1724-1726
- **C. COZEWITH.** Interpretation of carbon-13 NMR sequence distribution for ethylene-propylene copolymers made with heterogeneous catalysts. *MACROMOLECULES,* 1987, vol. 20 (6), 1237-1244
- **KAKUGO et al.** *MACROMOLECULES,* 1982, vol. 15 (4), 1150-1152
- **C. COZEWITH ; VER STRATE.** *MACROMOLECULES,* 1971, vol. 4, 482-489
- **RANDEL, JAMES C.** *MACROMOLECULES,* 1978, vol. 11 (1), 33-36
- **CHENG, H.N.** *MACROMOLECULES,* 1984, vol. 17 (10), 1950-1955
- **RAY, G. JOSEPH ; JOHNSON, PAUL E. ; KNOX, JACK R.** *MACROMOLECULES,* 1977, vol. 10 (4), 773-778